# EUROPÄISCHE PATENTSCHRIFT

(11) **EP 3 494 312 B1**
(45) Veröffentlichungstag und Bekanntmachung des Hinweises auf die Patenterteilung: **09.06.2021**
(21) Anmeldenummer: 17746119.1
(22) Anmeldetag: 01.08.2017
(51) Int. Cl.: F15B 19/00, F16H 61/12

(54) **HYDRAULIKSYSTEM FÜR EIN AUTOMATIKGETRIEBE EINES KRAFTFAHRZEUGS**
HYDRAULIC SYSTEM FOR AN AUTOMATIC TRANSMISSION OF A MOTOR VEHICLE
SYSTÈME HYDRAULIQUE POUR UNE BOÎTE DE VITESSES AUTOMATIQUE D'UN VÉHICULE AUTOMOBILE

(30) Priorität: 03.08.2016 DE 102016214373
(43) Veröffentlichungstag der Anmeldung: 12.06.2019
(73) Patentinhaber: Audi AG, 85045 Ingolstadt (DE)
(72) Erfinder: WEINHARDT, Mathias, 85051 Ingolstadt (DE)
(86) Internationale Anmeldenummer: PCT/EP2017/069444
(87) Internationale Veröffentlichungsnummer: WO 2018/024729

(56) Entgegenhaltungen:
- DE-A1- 10 204 183
- DE-A1-102011 100 809
- DE-A1-102013 003 894
- DE-A1-102014 003 083

## Beschreibung

Die Erfindung betrifft ein Hydrauliksystem für ein Automatikgetriebe, insbesondere Doppelkupplungsgetriebe, eines Kraftfahrzeugs nach dem Patentanspruch 1.

Bei einem Doppelkupplungsgetriebe ist mittels zweier Teilgetriebe ein vollautomatischer Gangwechsel ohne Zugkraftunterbrechung ermöglicht. Die Übertragung des Moments erfolgt über eine von zwei Kupplungen, die die zwei Teilgetriebe mit dem Antrieb verbindet. Die Kupplungen sowie die Gangsteller zum Einlegen der Gänge werden über Hydraulikzylinder betätigt, die hydraulisch über ein Hydrauliksystem ansteuerbar sind.

Aus der DE 10 2014 003 083 A1 ist ein gattungsgemäßes Hydrauliksystem bekannt, das einen Druckspeicher zur Bereitstellung eines Speicherdruckes im Hydrauliksystem aufweist. In einem, vom Druckspeicher zum Kupplungs-Hydraulikzylinder führenden Kupplungspfad ist ein von einer elektronischen Steuereinheit ansteuerbares Steuerventil angeordnet, mit dem der am Kupplungs-Hydraulikzylinder anliegende Hydraulikdruck einstellbar ist. Der Steuereinheit ist bevorzugt ein Drucksensor zugeordnet (DE 10 2013 003 894 A1), mit dem der am Kupplungs-Hydraulikzylinder anliegende Hydraulikdruck erfassbar ist. Zudem weist das Hydrauliksystem eine Lade-Hydraulikpumpe auf, die in einem Ladevorgang Hydraulikflüssigkeit in das Hydrauliksystem fördert, um den Speicherdruck zu erhöhen.

Die Hoch- und Niederdruckkreisläufe des Hydrauliksystems können über eine Bypassleitung mit integriertem Speicherladeventil verbunden sein. Das Speicherladeventil kann in einer Nichtladestellung die Hydraulikpumpe strömungstechnisch mit dem Niederdruckkreislauf verbinden, während gleichzeitig die Hydraulikpumpe vom Hochdruckkreislauf entkoppelt ist. Umgekehrt kann das Speicherladeventil in einer Ladestellung die Hydraulikpumpe strömungstechnisch mit dem Hochdruckkreislauf verbinden, während gleichzeitig die Hydraulikpumpe entkoppelt vom Niederdruckkreislauf ist. Das Speicherventil kann zu einem ersten Umschaltzeitpunkt selbsttätig von der Ladestellung in die Nichtladestellung sich verstellen, und zwar dann, wenn der Speicherdruck im Hochdruckkreislauf einen oberen Druckschwellwert überschreitet. Umgekehrt kann sich das Speicherladeventil zu einem zweiten Umschaltzeitpunkt selbsttätig von der Nichtladestellung in die Ladestellung verstellen, wenn der Speicherdruck einen unteren Druckschwellwert unterschreitet.

Eine Fehlfunktion des Speicherladeventils ist im Stand der Technik nur mit aufwendiger Sensorik erkennbar. Beispielhaft kann eine solche Fehlfunktion auftreten, wenn es im federvorgespannten Speicherladeventil zu einem Federbruch kommt oder zum Beispiel aufgrund von Schmutz-Ablagerungen ein Stellweg des Speicherladeventils behindert ist. In diesem Fall besteht das Risiko, dass das Speicherladeventil nicht mehr bei plausiblem unteren/oberen Druckschwellwerten zwischen der Ladestellung und der Nicht-Ladestellung umschaltet. Als relevante Parameter für die Funktionsfähigkeit des Speicherladeventils sind die sogenannte Ventilspreizung, die der Druckunterschied zwischen dem oberen und dem unteren Druckschwellwert ist, sowie die Umschaltzeitpunkte zwischen den Lade- und Nichtladestellungen hervorzuheben.

Aus der DE 10 2014 003 083 A1 ist ein Verfahren zum Betreiben eines Hydrauliksystems für ein Doppelkupplungsgetriebe bekannt. Aus der DE 10 2013 003 894 A1 ist ein Hydrauliksystem für ein Doppelkupplungsgetriebe bekannt. Aus der DE 10 2011 100 809 A1 ist ein Kupplungsgetriebe mit Sicherheitsventilanordnung bekannt. Aus der DE 102 04 183 A1 ist ein Verfahren zum Ermitteln einer fehlerbehafteten Ansteuerung eines über einen Stellantrieb angetriebenen Bauteils bekannt.

Die Aufgabe der Erfindung besteht darin, ein Hydrauliksystem bereitzustellen, bei dem mit reduziertem sensortechnischen Aufwand die Betriebssicherheit des Speicherladeventils gewährleistet werden kann.

Die Aufgabe ist durch die Merkmale des Patentanspruches 1 gelöst. Bevorzugte Weiterbildungen der Erfindung sind in den abhängigen Ansprüchen offenbart.

Gemäß dem kennzeichnenden Teil des Patentanspruches 1 weist die Steuereinheit ein Diagnosemodul auf, mit dem eine Ventilspreizung-Diagnose erfolgt, bei der eine Ist-Ventilspreizung zwischen dem unteren und oberen Druckschwellwert ermittelt wird. Das Diagnosemodul kann eine Auswerteeinheit aufweisen, die die ermittelte Ist-Ventilspreizung mit einer Soll-Ventilspreizung vergleicht. Bei Vorliegen einer signifikanten Abweichung kann die Auswerteeinheit einen Fehlerfall erkennen.

Der Ventilspreizung-Diagnose kann eine Umschaltzeitpunkt-Diagnose zeitlich vorgelagert sein, die ebenfalls mittels des Diagnosemoduls durchführbar ist. Bei der Umschaltzeitpunkt-Diagnose wird ermittelt, ob zum ersten Umschaltzeitpunkt der Ist-Speicherdruck im Bereich des oberen Druckschwellwerts liegt. Alternativ und/oder zusätzlich kann ermittelt werden, ob zum zweiten Umschaltzeitpunkt der Ist-Speicherdruck im Bereich des unteren Druckschwellwerts liegt. Bei Vorliegen einer signifikanten Abweichung des zum ersten Umschaltzeitpunkt erfassten Ist-Speicherdruckes vom oberen Druckschwellwert wird ein Fehlerfall erkannt.

Umgekehrt wird bei einer signifikanten Abweichung des zum zweiten Umschaltzeitpunktes erfassten Ist-Speicherdruckes vom unteren Druckschwellwert ebenfalls ein Fehlerfall erkannt.

Das Hydrauliksystem kann in einer technischen Umsetzung zumindest einen Kupplungspfad aufweisen, der vom Druckspeicher zum Kupplungs-Hydraulikzylinder führt. In dem Kupplungspfad kann ein von der Steuereinheit ansteuerbares Kupplungsventil angeordnet sein, mit dem ein am Kupplungs-Hydraulikzylinder anliegender Hydraulikdruck einstellbar ist. Der elektronischen Steuereinheit kann ein Drucksensor zugeordnet sein, mit dem ein am Kupplungs-Hydraulikzylinder anliegender Hydraulikdruck erfassbar ist. In einer einfachen technischen Umsetzung kann der im Kupplungspfad angeordnete Drucksensor für die Erfassung des Ist-Speicherdruckes während der Umschaltzeitpunkt-Diagnose genutzt werden. Der im Kupplungspfad angeordnete Drucksensor erfüllt im normalen Fahrbetrieb eine Sicherheitsfunktion, bei der überwacht wird, ob die Kupplung drucklos bzw. druckbeaufschlagt ist. Der Kupplungspfad-Drucksensor kann während der Umschaltzeitpunkt-Diagnose in Doppelfunktion auch zur Erfassung des Ist-Speicherdruckes genutzt werden.

Im Hinblick auf seine obige Sicherheitsfunktion im normalen Fahrbetrieb ist der Kupplungspfad-Drucksensor mit einem entsprechend geringem Messbereich (das heißt kostengünstig) ausgelegt. Der Messbereich des Drucksensors kann daher außerhalb, das heißt unterhalb des oberen Druckschwellwertes liegen, zu dem das Speicherladeventil von seiner Ladestellung in seine Nichtladestellung selbsttätig schaltet. In diesem Fall kann somit der Ist-Speicherdruck vom Kupplungspfad-Drucksensor zum ersten Umschaltzeitpunkt nicht unmittelbar erfasst werden. Von daher ist es bevorzugt, wenn eine Auswerteeinheit auf der Grundlage gemessener Druckwerte, die sich noch innerhalb des Drucksensor-Messbereiches befinden, ein Zeitfenster abschätzt, innerhalb dem bei einwandfreiem Speicherladeventil-Betrieb der erste Umschaltzeitpunkt und/oder der zweite Umschaltzeitpunkt liegt. Ermittelt die Auswerteeinheit, dass der erste/zweite Umschaltzeitpunkt außerhalb des Zeitfensters liegt, wird ein Fehlerfall erkannt. Beispielhaft kann die Auswerteinheit einen Extrapolier-Baustein aufweisen, der anhand der oben erwähnten gemessenen Druckwerte das oben erwähnte Zeitfenster extrapoliert.

Sofern bei der obigen Umschaltzeitpunkt-Diagnose kein Fehlerfall ermittelt wird, kann sich als Folgediagnose die Ventilspreizung-Diagnose anschließen.

Zur Ermittlung der Ist-Ventilspreizung kann die Auswerteeinheit ein Diagnosezeitintervall festlegen, das mit dem ersten Umschaltzeitpunkt startet und mit dem zweiten Umschaltzeitpunkt endet (das heißt während eines Nichtladebetriebes). In dem Diagnosezeitintervall erfolgt durch Betätigung eines Referenz-Hydraulikzylinders und durch eine Hydrauliksystem-Leckage eine Speicherdruck-Abnahme, die der Ist-Ventilspreizung entspricht. Zur Ermittlung dieser Speicherdruck-Abnahme während des Diagnosezeitintervalls wird bevorzugt wie folgt vorgegangen: So weist der Referenz-Hydraulikzylinder einen Positionssensor auf, der die Kolben-Stellwege bei Gangsteller-Betätigungen erfasst. Das Diagnosemodul kann die Kolben-Stellwege während des Diagnosezeitintervalls zu einem Gesamt-Diagnoseweg aufintegrieren und daraus die mit den Gangsteller-Betätigungen verbundene Druckabnahme berechnen. Die Auswerteeinheit kann dann aus der Summe der mit den Gangsteller-Betätigungen verbundenen Druckabnahme und der leckagebedingten Druckabnahme die Speicherdruck-Abnahme während des Diagnosezeitintervalls ermitteln. Die leckagebedingte Druckabnahme während des Diagnosezeitintervalls kann anhand vorangegangener Diagnosen oder Leckage-Messungen bestimmt werden.

Die ersten und zweiten Umschaltzeitpunkte beim Wechsel zwischen den Lade- und Nichtladestellungen können wie folgt ermittelt werden: So kann der Steuereinheit eine Strommesseinrichtung zugeordnet sein, mit der eine Ist-Stromaufnahme des Elektromotors erfassbar ist. Die Steuereinheit kann den Wechsel-Zeitpunkt von der hohen Stromaufnahme zur niedrigen Stromaufnahme als ersten Umschaltzeitpunkt festlegen. Umgekehrt kann die Steuereinheit den Wechsel-Zeitpunkt von niedrigen Stromaufnahme zur hohen Stromaufnahme als zweiten Umschaltzeitpunkt festlegen.

Der Referenz-Hydraulikzylinder kann in einer bevorzugten Ausführungsform ein Gangsteller-Hydraulikzylinder sein, der bei einer vorangegangenen Gangsteller-Diagnose als fehlerfrei erkannt worden ist. In einem vom Druckspeicher zum Referenz-Hydraulikzylinder führenden Referenz-Gangstellerpfad kann ein von der Steuereinheit ansteuerbares Steuerventil angeordnet sein, mit dem der am Referenz-Hydraulikzylinder anliegende Hydraulikdruck einstellbar ist.

Die Umschaltzeitpunkt-Diagnose und/oder die Ventilspreizung-Diagnose werden bevorzugt als Folgediagnosen zu einer zeitlich vorgelagerten Vorspanndruck- und Speichervolumen-Diagnose im Druckspeicher, einer Kupplungspfad-Diagnose und einer Gangstellerpfad-Diagnose durchgeführt.

In diesem Fall kann bevorzugt mittels des Diagnosemoduls eine Speichervolumen-Diagnose durchgeführt werden. Bei der Speichervolumen-Diagnose wird zunächst der Druckspeicher in einem Diagnose-Ladebetrieb komplett mit Hydraulikflüssigkeit gefüllt. Anschließend wird vom Diagnosemodul einer der Gangsteller-Hydraulikzylinder als Referenz-Hydraulikzylinder ausgewählt. Dieser wird während eines Diagnose-Zeitintervalls betätigt, wodurch eine Hydraulikflüssigkeits-Entnahme erfolgt, die sich bei einer intermittierenden Betätigung des Referenz-Hydraulikzylinders (d.h. Schluckvolumen) und der Hydrauliksystem-Leckage ergibt. Der Referenz-Hydraulikzylinder wird im Diagnose-Zeitintervall solange betätigt, bis aufgrund der damit verbundenen Hydraulikflüssigkeits-Entnahme ein Umgebungsdruck im Hydrauliksystem vorliegt. Bei Umgebungsdruck ist die Ölkammer im Druckspeicher vollständig entleert, das heißt der Druckkolben ist mit einer Vorspannkraft gegen einen Anschlag des Druckspeichers gedrückt.

Das Diagnosemodul weist eine Auswerteeinheit auf, die die obige Hydraulikflüssigkeits-Entnahme ermittelt und mit einem Referenz-Druckspeichervolumen vergleicht. Bei Vorliegen einer signifikanten Abweichung wird ein Speichervolumen-Fehler erkannt.

In einer technischen Umsetzung kann der Referenz-Hydraulikzylinder einen Positionssensor aufweisen, der die Kolben-Stellwege im Referenz-Hydraulikzylinder bei Gangsteller-Betätigungen erfasst. Das Diagnosemodul kann die Kolben-Stellwege während der Speichervolumen-Diagnose zu einem Gesamt-Stellweg aufintegrieren und daraus die mit den Gangsteller-Betätigungen verbundene Hydraulikflüssigkeits-Entnahme (das heißt das Schluckvolumen) berechnen.

In einer einfachen Ausführungsvariante kann das Vorliegen von Umgebungsdruck im Hydrauliksystem mit Hilfe des Positionssensors erkannt werden: So wird bei Erreichen des Umgebungsdruckes im Hydrauliksystem der Referenz-Hydraulikzylinder nicht mehr mit einem Betätigungsdruck beaufschlagt, der zu einer Kolben-Stellbewegung führt. Der Positionssensor erfasst daher, dass kein Kolben-Stellweg mehr im Referenz-Hydraulikzylinder zurückgelegt wird. Daraus folgert das Diagnosemodul, dass der Umgebungsdruck erreicht ist und das Diagnose-Zeitintervall beendet ist. Bei der obigen Speichervolumen-Diagnose ist zusätzlich zur Hydraulikflüssigkeits-Entnahme aufgrund der Referenz-Hydraulikzylinder-Betätigung (nachfolgend als Schluckvolumen bezeichnet) die mit einer permanenten Hydrauliksystem-Leckage verbundenen Hydraulikflüssigkeits-Entnahme zu berücksichtigen. Diese kann bevorzugt aus vorangegangenen Messungen und/oder Diagnosen bereits im Diagnosemodul hinterlegt sein.

Das Hydrauliksystem weist zusätzlich zum oben erwähnten Referenz-Gangstellerpfad zumindest einen vom Druckspeicher zum Kupplungs-Hydraulikzylinder führenden Kupplungspfad auf, in dem ein von der elektronischen Steuereinheit ansteuerbares Kupplungsventil angeordnet ist. Mit dem Kupplungsventil kann ein am Kupplungs-Hydraulikzylinder anliegender Hydraulikdruck eingestellt werden. Der elektronischen Steuereinheit ist außerdem ein Drucksensor zugeordnet, mit dem der am Kupplungs-Hydraulikzylinder anliegende Hydraulikdruck erfassbar ist.

Während der Speichervolumen-Diagnose kann sowohl der oben beschriebene Kupplungspfad als auch der zum Referenz-Hydraulikzylinder führende Referenz-Gangstellerpfad mit dem im Hydrauliksystem vorherrschenden Ist-Speicherdruck beaufschlagt sein. Dadurch kann in meßtechnisch einfacher Weise der Ist-Speicherdruckverlauf während der Speichervolumen-Diagnose erfasst werden. Zudem kann bei diesem Hydrauliksystem-Aufbau das Leckage-Verhalten des Kupplungspfads und des Referenz-Gangstellerpfads unter Nutzung des im Kupplungspfad angeordneten Drucksensors erfolgen. Im Gegensatz zum Referenz-Hydraulikzylinder, der im Referenz-Gangstellerpfad angeordnet ist, sind die Hydraulikzylinder der anderen Gangstellerpfade vom Speicherdruck entkoppelt, d.h. nicht mit Speicherdruck beaufschlagt.

Die Speichervolumen-Diagnose kann bevorzugt als eine Folge-Diagnose zeitlich nach einer Gangstellerpfad-Diagnose durchgeführt werden. In diesem Fall kann die Speichervolumen-Diagnose nur unter der Bedingung erfolgen, dass bei der vorangegangenen Gangstellerpfad-Diagnose zumindest ein fehlerfrei funktionierender Gangsteller erkannt ist, der als Referenz-Gangsteller für die Speichervolumen-Diagnose nutzbar ist.

Die oben erwähnte Gangstellerpfad-Diagnose kann mit dem Diagnosemodul durchführbar sein, bei der das Diagnosemodul unter Nutzung des im obigen, zumindest einen Kupplungspfad angeordneten Drucksensors ein Leckage-Verhalten in dem jeweiligen Gangstellerpfad prüft. Die Gangstellerpfad-Diagnose ist bevorzugt als eine Folge-Diagnose zeitlich nach der oben erwähnten Kupplungspfad-Diagnose durchführbar. Die Gangstellerpfad-Diagnose erfolgt dabei bevorzugt ausschließlich unter der Bedingung, dass in einer später beschriebenen, zeitlich vorgelagerten Kupplungspfad-Diagnose zumindest ein Kupplungspfad mit fehlerfreier Leckage erkannt ist. In diesem Fall wird der Drucksensor in dem als fehlerfrei erkannten Kupplungspfad (nachfolgend Referenz-Kupplungspfad) für die anschließende Gangstellerpfad-Diagnose verwendet.

Für die Gangstellerpfad-Diagnose öffnet das Diagnosemodul das im Referenz-Kupplungspfad angeordnete Kupplungsventil, damit der im Referenz-Kupplungspfad angeordnete Drucksensor einen Ist-Speicherdruckverlauf erfassen kann. Zudem öffnet das Diagnosemodul ein Druckregelventil, das in einer zu den Gangstellern führenden Verbindungsleitung angeordnet ist, um eine Druckverbindung zwischen dem im Referenz-Kupplungspfad angeordneten Drucksensor und dem im Gangstellerpfad angeordneten Gangstellerventil herzustellen.

In einem ersten Diagnoseschritt erfolgt ein Diagnose-Ladebetrieb, bei der vom Drucksensor erfasste Ist-Speicherdruck bis auf einen oberen Schwellwert erhöht wird, zu dem die Lade-Hydraulikpumpe ausgeschaltet wird. Nach dem Ende des Diagnose-Ladebetriebs kann eine dritte Auswerteeinheit einen Druckgradienten des Speicherdruckverlaufes über den Drucksensor erfassen sowie mit einem Referenz-Druckgradienten vergleichen und auswerten, ob ein fehlerfreier oder fehlerbehafteter Druckabfall (das heißt Gangsteller-Leckage) im Speicherdruckverlauf vorliegt.

In einer technischen Umsetzung kann das Hydrauliksystem mehrere zueinander parallel geschaltete Gangstellerpfade aufweisen, in denen jeweils ein Gangstellerventil angeordnet ist, das zwischen einer Sperr-Ventilstellung sowie zwei Durchfluss-Ventilstellungen verstellbar ist.

Bei einer solchen Konstellation kann die Gangstellerpfad-Diagnose im zu prüfenden Gangstellerpfad für jede der Durchfluss-Ventilstellungen separat durchgeführt und auf Fehlerfreiheit ausgewertet werden. Die Gangstellerventile in den nicht zu prüfenden Gangstellerpfaden sind dagegen allesamt in der Sperr-Ventilstellung geschaltet, um die Meßgenauigkeit am zu prüfenden Gangstellerpfad zu erhöhen.

Die oben erwähnte Erfassung des Druckgradienten im Speicherdruckverlauf erfolgt innerhalb eines Messzeitintervalls. Dessen Startzeitpunkt liegt bevorzugt unmittelbar nach dem Ende des Diagnose-Ladebetriebs. Während der Messung des Druckgradienten erfolgt zudem auch eine Erfassung des Ist-Speicherdrucks zum Startzeitpunkt und zum Mess-Endzeitpunkt des Messzeitintervalls. Mittels dieser beiden Absolut-Druckwerte kann das Diagnosemodul dann eine fehlerfreie Diagnose erkennen, wenn eine ausreichend große Speicherdruckdifferenz zwischen dem Start- und Endzeitpunkt vorliegt.

Der Druckspeicher des Hydrauliksystems kann als eine Kolben-Zylinder-Einheit aufgebaut sein, die eine mit dem Kupplungspfad verbundene Ölkammer und einen vorgespannten Druckkolben aufweist, an dem ein Vorspanndruck anliegt. Die Vorspannung wird beispielhaft durch einen Gasdruck oder alternativ durch eine Feder erzielt. Bei vollständig entleerter Ölkammer wird der Druckkolben mit einer Vorspannkraft gegen einen mechanischen Anschlag im Druckspeicher gedrückt. Bei einem solchen vollkommen entleerten Zustand wird der Kupplungspfad nicht druckbeaufschlagt. Vielmehr herrscht in diesem Fall im Kupplungspfad ein Umgebungsdruck vor. Eine Fehlfunktion des Druckspeichers ist im Stand der Technik nur mit aufwendiger Sensorik erkennbar, beispielhaft eine Gasdruck-Reduzierung aufgrund von Gasleckage.

Die Gangstellerpfad-Diagnose kann bevorzugt als eine Folge-Diagnose zeitlich nach einer Vorspanndruck-Diagnose und/oder einer Kupplungspfad-Diagnose erfolgen.

Vor diesem Hintergrund kann bevorzugt mit dem Diagnosemodul der Vorspanndruck des Druckspeichers geprüft werden. Hierzu sind in dem Diagnosemodul zumindest ein oder mehrere Referenzwerte hinterlegt, die einen zeitlichen Referenz-Speicherdruckverlauf während eines Ladevorgangs wiedergeben. Für die Druckspeicher-Diagnose erfolgt ein Ladebetrieb, bei dem das im Kupplungspfad angeordnete Kupplungsventil durchgängig geöffnet wird, damit der Drucksensor einen zeitlichen Ist-Speicherdruckverlauf während des Ladebetriebs erfassen kann. Zur Auswertung des zeitlichen Ist-Speicherdruckverlaufes weist das Diagnosemodul eine Auswerteeinheit auf, mit der ein Druckspeicher-Fehlerfall erkennbar ist, sofern eine signifikante Abweichung zwischen dem Referenz-Speicherdruckverlauf und dem Ist-Speicherdruckverlauf vorliegt.

Für die Druckspeicher-Diagnose erfolgt der Ladebetrieb bei konstanter Ladedrehzahl der Hydraulik-Ladepumpe. Auf diese Weise wird der Kupplungspfad mit Hydraulikflüssigkeit gefüllt, und zwar bis zu einem Vorspanndruck-Zeitpunkt, zu dem der von dem Drucksensor erfasste Hydraulikdruck (d.h. der Ist-Speicherdruck) so groß ist wie der (Ist-)Vorspanndruck des Druckspeichers. Im weiteren Verlauf des Ladevorgangs wird ab dem Vorspanndruck-Zeitpunkt die Ölkammer des Druckspeichers gefüllt, und zwar unter Verstellung des Druckkolbens sowie unter weiterer Erhöhung des Ist-Speicherdrucks.

Bei einem solchen Ladevorgang ergibt sich eine charakteristische Zeit-Ladekurve. Diese kann zwischen einem Diagnose-Startzeitpunkt, zu dem die Druckspeicher-Ölkammer vollständig entleert ist, und dem oben erwähnten Oberer Schwellwert verlaufen und für die Druckspeicher-Diagnose nutzbar sein: So weist die Zeit-Ladekurve (d.h. der Ist-Speicherdruckverlauf) bis zum Erreichen des Vorspanndruck-Zeitpunktes einen steilen Druckgradienten und nach dem Vorspanndruck-Zeitpunkt einen demgegenüber stark reduzierten Druckgradienten auf. Bei einer einwandfreien Druckspeicher-Funktion stimmt der im Vorspanndruck-Zeitpunkt erfasste Ist-Vorspanndruck mit der konstruktiven Auslegung des Druckspeicher-Vorspanndrucks überein, der unter Berücksichtigung der starken Temperaturabhängigkeit in dem Diagnosemodul hinterlegt ist.

In der Auswerteeinheit des Diagnosemoduls wird der vom Drucksensor zum Vorspanndruck-Zeitpunkt erfasste Ist-Speicherdruck mit dem vordefinierten Referenz-Vorspanndruck des Druckspeichers verglichen. Bei einer signifikanten Abweichung zwischen beiden Werten wird ein nicht plausibler Vorspanndruck im Druckspeicher festgestellt.

Wie bereits oben erwähnt, erfolgt der Diagnosestart unter der Diagnose-Startbedingung, dass die Ölkammer des Druckspeichers vollständig entleert ist und im Hydrauliksystem ein Umgebungsdruck vorherrscht. Zum Erreichen dieser Diagnosestart-Bedingung wird vorab zumindest ein Hydraulikzylinder der Kupplung und/oder der Gangsteller so lange betätigt, bis aufgrund der mit der Hydraulikzylinder-Betätigung verbundenen Hydraulikflüssigkeits-Entnahme der vom Drucksensor erfasste Ist-Speicherdruck bis auf den Umgebungsdruck reduziert ist. In diesem Fall ist auch automatisch die Druckspeicher-Ölkammer vollständig entleert.

Zur Ermittlung des Vorspanndruck-Zeitpunkts kann die Auswerteeinheit die zeitlichen Druckgradienten vor und nach dem Vorspanndruck-Zeitpunkt auswerten und miteinander vergleichen sowie daraus den Vorspanndruck-Zeitpunkt ermitteln oder bestimmen, ob ein Druckspeicher-Fehler vorliegt oder nicht.

Bei einem Doppelkupplungsgetriebe liegen zwei Kupplungen vor, die jeweils über im Wesentlichen identische Kupplungspfade mit dem Druckspeicher verbunden sind. In diesem Fall kann die oben erläuterte Druckspeicher-Diagnose doppelt ausgeführt werden, und zwar im Rahmen einer ersten Teildiagnose mit dem im ersten Kupplungspfad angeordneten Drucksensor sowie mit dem im zweiten Kupplungspfad geschlossenen Kupplungsventil, und im Rahmen einer zweiten Teildiagnose mit dem im zweiten Kupplungspfad angeordneten Drucksensor sowie mit dem im ersten Kupplungspfad geschlossenen Kupplungsventil. In der Auswerteeinheit werden für ein Plausibilitätsprüfung der Druckspeicher-Diagnose die erste und die zweite Teildiagnose miteinander verglichen. Bei Vorliegen identischer Druckspeicher-Fehler sowohl in der ersten als auch in der zweiten Teildiagnose erkennt die Auswerteeinheit einen Druckspeicher-Fehler. Im Unterschied dazu erkennt die Auswerteeinheit bei Vorliegen unterschiedlicher Fehler-Ergebnisse in den beiden Teildiagnosen einen Fehler (d.h. z.B. eine Leckage) in einem der beiden Kupplungspfade.

In einer weiteren Ausführungsform kann das Diagnosemodul zusätzlich eine eigene Kupplungspfad-Diagnose durchführen, die als eine Folge-Diagnose zeitlich unmittelbar an die Vorspanndruck-Diagnose anschließt. Für die Kupplungspfad-Diagnose wird der während der Vorspanndruck-Diagnose durchgeführte Diagnose-Ladebetrieb bis zum Erreichen eines maximalen Speicherdruckes (d.h. dem Oberer Schwellwert) fortgesetzt und dort zu einem Ausschalt-Zeitpunkt beendet. Die Auswerteeinheit vergleicht nach dem Ladebetrieb-Ende den weiteren Ist-Speicherdruckverlauf mit hinterlegten Referenzwerten und wertet aus, ob ein fehlerfreier oder einer fehlerbehafteter, leckagebedingter Druckabfall im (vom Drucksensor erfassten) Speicherdruckverlauf vorliegt.

Bevorzugt ist es, wenn die obige Kupplungspfad-Diagnose nur dann durchgeführt wird, sofern ein fehlerfreier Vorspanndruck im Druckspeicher sichergestellt ist. Bevorzugt kann somit die Kupplungspfad-Diagnose im Diagnosemodul nur unter der Bedingung durchgeführt werden, dass bei der Vorspanndruck-Diagnose ein fehlerfreier Druckspeicher-Vorspanndruck vorliegt.

Die Erfindung und ihre vorteilhaften Aus- und Weiterbildungen sowie deren Vorteile werden nachfolgend anhand von Zeichnungen näher erläutert.

Es zeigen:
- Figur 1: ein Blockschaltdiagramm eines Doppelkupplungsgetriebes für ein Kraftfahrzeug mit sieben Vorwärtsgängen sowie einem Rückwärtsgang;
- Figur 2a und 2b: ein Hydrauliksystem eines Doppelkupplungsgetriebes in einem Blockschaltbild sowie grob schematisch den Aufbau eines Druckspeichers;
- Figur 3: in einem Blockschaltbild die Programmbausteine zur Druckspeicher- und Kupplungspfad-Diagnose in einem Diagnosemodul; und
- Figur 4: Diagramme, die die Druckspeicher- und Kupplungspfad-Diagnose veranschaulichen;
- Figur 5: in einem Blockschaltbild die zur Gangstellerpfad-Diagnose erforderlichen Programmbausteine in dem Diagnosemodul;
- Figur 6: Diagramme, die die Gangstellerpfad-Diagnose veranschaulichen;
- Figur 7: in einem Blockschaltbild die zur Speichervolumen-Diagnose erforderlichen Programmbausteine in dem Diagnosemodul;
- Figur 8: Diagramme, die die Speichervolumen-Diagnose veranschaulichen;
- Figur 9: in einem Blockschaltdiagramm die zur Umschaltzeitpunkt-Diagnose erforderlichen Programmbausteine in dem Diagnosemodul;
- Figur 10: in einem Blockschaltbild die zur Ventilspreizung-Diagnose erforderlichen Programmbausteine in dem Diagnosemodul;
- Figur 11: Diagramme, die die zeitlichen Verläufe während der Umschaltzeitpunkt-Diagnose und während der Ventilspreizung-Diagnose veranschaulichen;
- Figur 12: in einem Blockschaltdiagramm die zur Sicherheitsventil-Diagnose erforderlichen Programmbausteine in dem Diagnosemodul;
- Figur 13: Diagramme, die die zeitlichen Verläufe relevanter Parameter während der Sicherheitsventil-Diagnose veranschaulichen;
- Figur 14: in einem Blockschaltdiagramm die zur Fördervolumenstrom-Diagnose erforderlichen Programmbausteine in dem Diagnosemodul;
- Figur 15: Diagramme, die die zeitlichen Verläufe während der Fördervolumenstrom-Diagnose veranschaulichen; und
- Figur 16: eine Analyseeinheit, in die die in den Fehlerspeichern generierten Fehlersignale auslesbar sind.

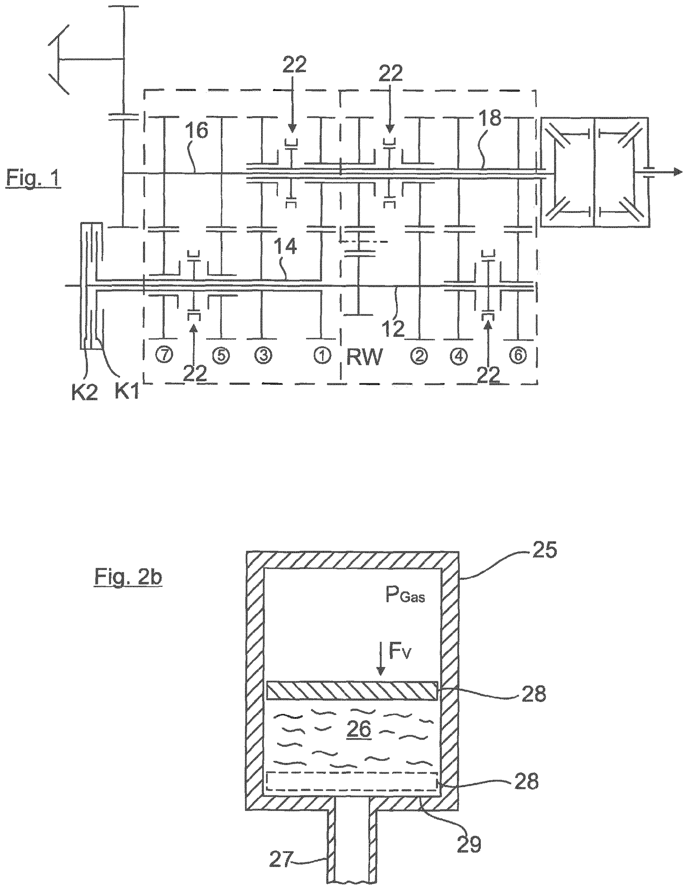

In der Fig. 1 ist in einer Prinzipdarstellung ein Doppelkupplungsgetriebe für ein Kraftfahrzeug mit Allradantrieb gezeigt. Das Doppelkupplungsgetriebe weist sieben Vorwärtsgänge (siehe die eingekreisten Ziffern 1 bis 7) sowie einen Rückwärtsgang RW auf. Das Doppelkupplungsgetriebe ist nachfolgend nur insoweit beschrieben, als es für das Verständnis der Erfindung erforderlich ist. So weist das Doppelkupplungsgetriebe zwei Eingangswellen 12, 14 auf, die koaxial zueinander angeordnet sind und über zwei hydraulisch betätigbare Lamellenkupplungen K1, K2 alternierend mit der Antriebsquelle, zum Beispiel eine Brennkraftmaschine, verbindbar sind. Die Eingangswelle 14 ist als eine Hohlwelle ausgeführt, in der die als Vollwelle ausgebildete Eingangswelle 12 geführt ist. Die beiden Eingangswellen 12, 14 treiben über Zahnradsätze der Vorwärtsgänge sowie des Rückwärtsganges auf eine achsparallel angeordnete Abtriebswelle 16 und eine als Hohlwelle gebildete Zwischenwelle 18 ab. Die Zahnradsätze der Vorwärtsgänge 1 bis 7 weisen jeweils Festzahnräder und über hydraulisch betätigbare Gangsteller schaltbare Loszahnräder auf. Die Gangsteller können beispielhaft Doppelsynchronkupplungen sein, die jeweils aus einer Neutralstellung heraus zwei benachbarte Loszahnräder schalten können.

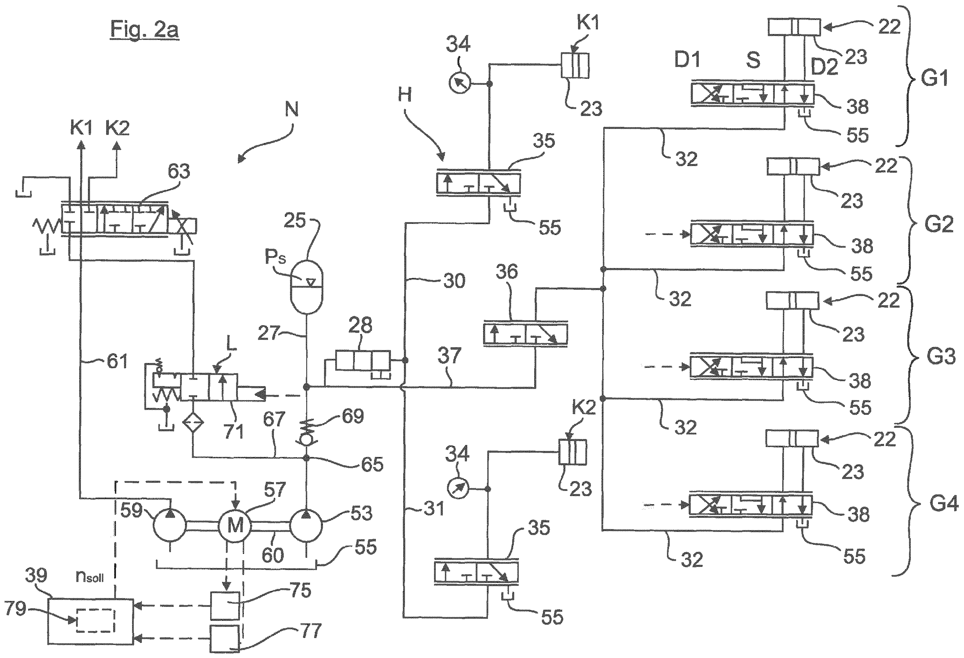

In der Fig. 2a ist das Hydrauliksystem des Doppelkupplungsgetriebes in einem stark vereinfachten Blockschaltbild dargestellt. Mit Hilfe des Hydrauliksystems werden die Hydraulikzylinder 23 der Kupplungen K1, K2 sowie die Hydraulikzylinder 22 der Gangsteller betätigt. Das Hydrauliksystem weist gemäß der Fig. 2a einen Hochdruckkreislauf H sowie einen Niederdruckkreislauf N auf. In dem Hochdruckkreislauf H können die darin geschalteten Hydraulikzylinder 22, 23 der Kupplungen K1, K2 sowie der Gangsteller über einen Druckspeicher 25 mit einem Speicherdruck ps beaufschlagt werden, der in einer Größenordnung von zum Beispiel 30 bar liegen kann. Hierzu ist eine am Druckspeicher 25 angeschlossene Hauptleitung 27 über Kupplungspfade 30, 31 zu den Kupplungs-Hydraulikzylindern 23 geführt und über Gangstellerpfade 32 zu den Gangsteller-Hydraulikzylindern 22 geführt. In den Gangsteller- und Kupplungspfaden 30, 31, 32 sind jeweils Kupplung- oder Gangstellerventile 35, 38 angeordnet. Die Kupplung- oder Gangstellerventile 35, 38 sind in nicht dargestellter Weise über eine zentrale Steuereinheit 39 ansteuerbar. Zudem ist die Steuereinheit 39 mit Drucksensoren 34 signaltechnisch in Verbindung. Die Drucksensoren 34 erfassen jeweils den an der ersten Kupplung K1 und an der zweiten Kupplung K2 anliegenden Hydraulikdruck.

Das Hydrauliksystem weist zudem eine Ladepumpe 53 auf, die eingangsseitig mit einem Ölsumpf 55 verbunden ist. Die Ladepumpe 53 ist zum Aufladen des Druckspeichers 25 über einen Elektromotor 57 von der Steuereinheit 39 ansteuerbar. Zudem ist die Ladepumpe 53 zusammen mit einer Kühlpumpe 59 auf einer gemeinsamen Antriebswelle 60 angeordnet, die vom Elektromotor 57 angetrieben wird. Die Kühlpumpe 59 ist ausgangsseitig mit einer Niederdruckleitung 61 in Verbindung, die zu einem Verteilerventil 63 führt. In Abhängigkeit von der Stellung des Verteilerventiles 63 kann bei Vorliegen von Kühlbedarf die Hydraulikflüssigkeit zur ersten und/oder zweiten Kupplung K1, K2 und anschließend in den Ölsumpf 55 rückgeführt werden.

In der Fig. 2a zweigt die Hauptleitung 27 des Hochdruckkreislaufes H an einer Verzweigungsstelle 65 in eine Bypassleitung 67 ab, die mit der Niederdruckleitung 61 des Niederdruckkreislaufes N verbunden ist. Stromab der Verzweigungsstelle 65 ist ein später beschriebenes Rückschlagventil 69 angeordnet. Zudem ist in der Bypassleitung 67 ein Speicherladeventil 71 integriert. Das Speicherladeventil 71 kann in Abhängigkeit von Höhe des Speicherdruckes ps im Hochdruckkreislauf H zwischen in der Fig. 2a gezeigten Ladestellung L und einer Kühlstellung K verstellt werden.

Der Speicherdruck ps im Hochdruckkreislauf H wirkt als ein Steuerdruck, mit dem das Speicherladeventil 71 ohne zusätzliche Fremdenergie, das heißt selbsttätig, verstellbar ist. Das Speicherladeventil 71 ist dabei so ausgelegt, dass es sich in die Ladestellung L verstellt, sofern der Speicherdruck ps im Hochdruckkreislauf H zum Beispiel einen unteren Schwellwert, zum Beispiel 25 bar, unterschreitet. Außerdem wird das Speicherladeventil 71 selbsttätig in seine Kühlstellung K verschoben, sofern der Speicherdruck ps einen oberen Schwellwert pₘₐₓ, zum Beispiel 28 bar, überschreitet.

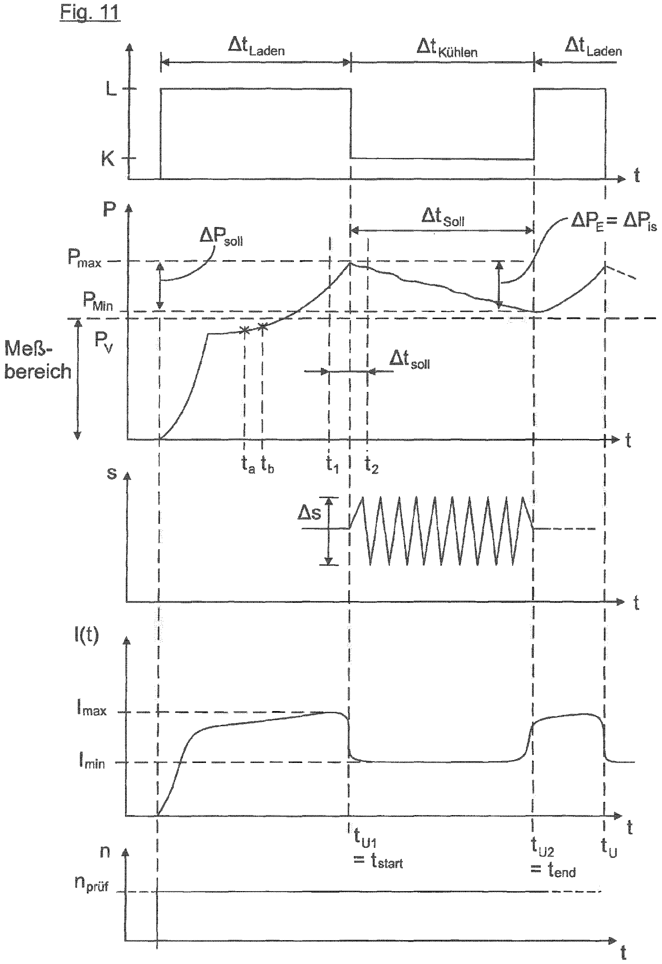

Im Fahrbetrieb kommt es durch Betätigungen der Kupplungen K1, K2 sowie der Gangsteller G1 bis G4 zu Druckverlusten. Zudem ergeben sich weitere Druckverluste durch eine Basisleckage, das heißt aufgrund von Ventilspalten oder dergleichen, im Hochdruckkreislauf H. Dadurch wird der Speicherdruck ps während des Fahrbetriebes reduziert. Für den Fall, dass der Speicherdruck pₛ den unteren Schwellwert pₘᵢₙ unterschreitet (das heißt es liegt ein Druckspeicher-Ladebedarf vor), verstellt sich das Speicherladeventil 71 selbsttätig in seine Ladestellung L (Fig. 2a). Bei Erkennen des Druckspeicher-Ladebedarfs steuert die Steuereinheit 39 den Elektromotor 57 mit einer Lade-Solldrehzahl an. Dadurch kann die Lade-Hydraulikpumpe 53 den Druckspeicher 25 aufladen. In einem solchen Ladebetrieb arbeitet die Lade-Hydraulikpumpe 53 unter großer Pumpenlast und daher mit entsprechend großer Ist-Stromaufnahme Iₘₐₓ (Fig. 11). Überschreitet der Speicherdruck pₛ den oberen Schwellwert pₘₐₓ (Fig. 11), das heißt es liegt kein Druckspeicher-Ladebedarf mehr vor, so stellt sich das Speicherladeventil 71 selbsttätig in seine Kühlstellung K. In der Kühlstellung K fördert die Lade-Hydraulikpumpe 53 über die nunmehr geöffnete Bypassleitung 67 Hydrauliköl in den Niederdruckkreislauf N. Gleichzeitig ist der Hochdruckkreislauf H über das Rückschlagventil 69 druckdicht geschlossen. Entsprechend arbeitet die Lade-Hydraulikpumpe 53 nicht mehr mit hoher, sondern mit einer reduzierten Pumpenlast sowie entsprechend geringer Ist-Stromaufnahme Iₘᵢₙ (Fig. 11).

Wie oben erwähnt, steuert die Steuereinheit 39 bei Erkennen eines Druckspeicher-Ladebedarfs den Elektromotor 57 mit einer Lade-Solldrehzahl an. Zum Erkennen eines solchen Druckspeicher-Ladebedarfs ist erfindungsgemäß auf einen Drucksensor im Hochdruckkreislauf H oder einem Lagesensor im Speicherladeventil 71 verzichtet. Anstelle dessen weist die Steuereinheit 39 eine Auswerteeinheit auf. Die Auswerteeinheit ist signaltechnisch in Verbindung mit einer in der Motoransteuerung integrierten Strommesseinrichtung 75, die eine Ist-Stromaufnahme lᵢₛₜ des Elektromotors 57 erfasst, und mit einem Drehzahlsensor 77, der eine Ist-Drehzahl nᵢₛₜ des Elektromotors 57 erfasst.

In der Fig. 2b ist der grundsätzliche Aufbau sowie die Funktionsweise des Druckspeichers 25 ersichtlich. Demzufolge ist der Druckspeicher 25 eine Kolben-Zylinder-Einheit mit einer, mit den Hydraulikleitungen 27, 31, 32 verbundenen Ölkammer 26 und einem vorgespannten Druckkolben 28. Die Vorspannung wird hier beispielhaft durch einen Gasdruck erzielt, der am Druckkolben 28 anliegt. Alternativ kann die Vorspannung auch durch eine Feder erzielt werden. Bei vollständig entleerter Ölkammer 26 wird der Druckkolben 28 (in der Fig. 2b in gestrichelter Linie angedeutet) mit einer Vorspannkraft F_{V} gegen einen Anschlag 29 des Druckspeichers 25 gedrückt. Das heißt, dass bei einem Befüllvorgang zur Überwindung der Vorspannkraft F_{V} ein Hydraulikdruck anliegt, der größer ist als ein, mit der Vorspannkraft F_{V} korrelierender Vorspanndruck p_{V}.

In der Fig. 2b ist der Druckspeicher 25 in einem teilbefüllten Zustand gezeigt, bei dem das Hydrauliköl unter Aufbau der Vorspannkraft F_{V} mit einem Speicherdruck am Druckkolben 28 anliegt. Im vollkommen entleerten Zustand werden die Hydraulikleitungen 27, 31 nicht mittels des Druckspeichers 25 druckbeaufschlagt. Vielmehr herrscht in den Hydraulikleitungen 27, 31, 32 Umgebungsdruck p_{U} vor. Eine Betriebsbereitschaft des Automatikgetriebes ist dann gegeben, wenn sämtliche Hydraulikleitungen 27, 31, 32 mit Hydrauliköl gefüllt sind und in den Hydraulikleitungen 27, 31, 32 ein Hydraulikdruck anliegt, der größer als der Vorspanndruck p_{V} ist, und zwar um einen vorgegebenen Druckoffset, damit die Betriebsbereitschaft nicht sofort nach Abschaltung der Ladepumpe 53 aufgrund einer Basisleckage wieder verloren geht.

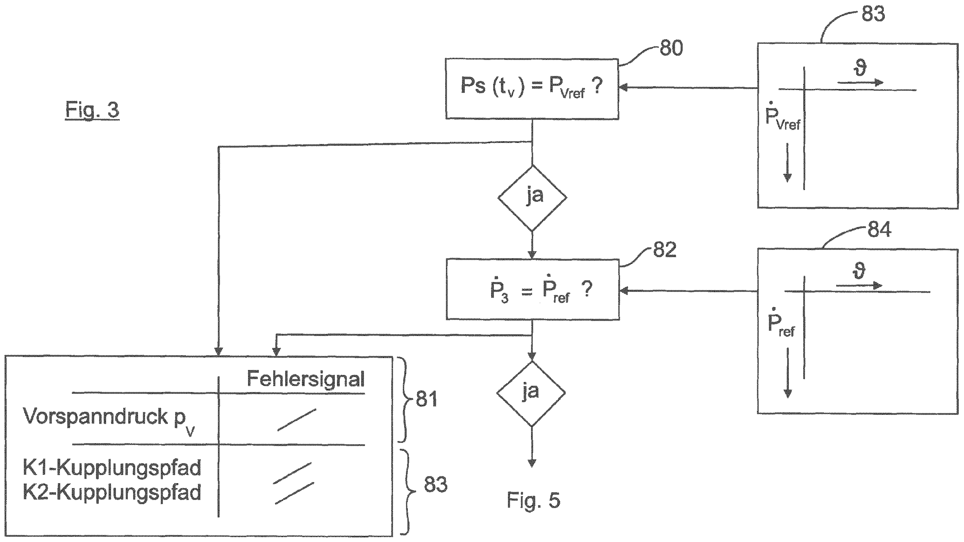

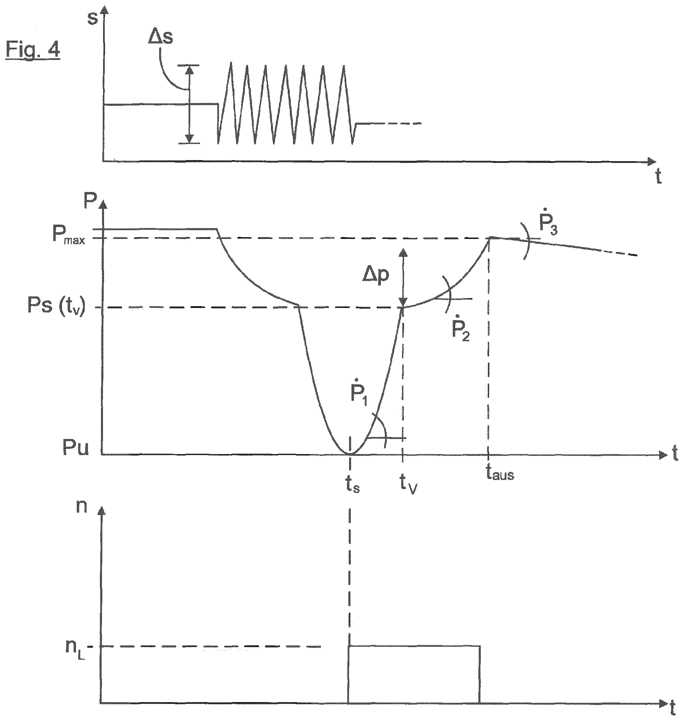

In der Figur 2a weist die Steuereinheit 39 ein Diagnosemodul 79 auf, mit dem das Ladeverhalten prüfbar ist, und zwar insbesondere der Sachverhalt prüfbar ist, ob der tatsächliche Vorspanndruck pv im Druckspeicher 25 mit einem in der Spezifikation angegebenen (d.h. konstruktiv vorgegebenen) Referenz-Vorspanndruck p_{VRef} übereinstimmt. Die hierzu erforderlichen Programmbausteinen sind in der Fig. 3 skizziert. Demnach weist das Diagnosemodul 79 eine Auswerteeinheit 80 auf, mit der ein in einem Kennfeld 83 hinterlegter temperaturabhängiger Vorspanndruck p_{VRef} mit einem später beschriebenen Ist-Speicherdruck ps(t_{V}) (Fig. 4) verglichen wird. Der Ist-Speicherdruck ps(t_{V}) wird zu einem später beschriebenen Vorspanndruck-Zeitpunkt t_{V} vom Drucksensor 34 erfasst. Während des Diagnosebetriebs ist das Kupplungsventil 35 in einem der Kupplungspfade 30, 31 dauerhaft geöffnet, während das Kupplungsventil 35 im anderen Kupplungspfad geschlossen ist.

Bei einer einwandfreien Druckspeicher-Funktion stimmt der im Vorspanndruck-Zeitpunkt t_{V} erfasste Ist-Speicherdruck ps(t_{V}) mit dem Referenz-Vorspanndruck p_{VRef} überein. Bei einer signifikanten Vorspanndruck-Abweichung stellt dagegen die Auswerteeinheit 80 einen Vorspanndruck-Fehler fest, der in einem Vorspanndruck-Fehlerspeicher 81 (Fig. 3) hinterlegt wird. Sofern festgestellt ist, dass der Druckspeicher 25 in Ordnung ist, wird mittels einer weiteren Auswerteeinheit 82 (Fig. 3) des Diagnosemoduls 79 eine später beschriebene Kupplungspfad-Diagnose durchgeführt.

Nachfolgend wird die Druckspeicher-Diagnose (d.h. Vorspanndruck-Diagnose) und die Kupplungspfad-Diagnose anhand der Fig. 3 und 4 erläutert: So wird zur Vorbereitung der Druckspeicher-Diagnose die Ölkammer 26 des Druckspeichers 25 vollständig entleert und der Ist-Speicherdruck pₛ(t) im Hydrauliksystem auf einen Umgebungsdruck pu reduziert, so dass zu einem Diagnose-Startzeitpunkt t_{S} (Fig. 4) die Druckspeicher-Diagnose beginnen kann. Die vorbeschriebene Diagnosestart-Bedingung wird durch eine Betätigung der Hydraulikzylinder 22, 23 der Kupplungen K1, K2 und der Gangsteller G1 bis G4 erzielt, wie es in dem oberen Stellweg-Diagramm der Fig. 4 angedeutet ist. Demzufolge werden die Hydraulikzylinder 22, 23 durch eine Bestromung der jeweiligen Kupplungs- oder Gangstellerventile 35, 38 solange intermittierend angesteuert, bis aufgrund der mit der Hydraulikzylinder-Betätigung verbundenen Hydraulikflüssigkeits-Entnahme der vom Drucksensor 34 erfasste Speicherdruck ps auf den Umgebungsdruck p_{U} reduziert ist. Das Vorliegen eines solchen Umgebungsdruckes p_{U} kann durch den Drucksensor 34 erfasst werden. Alternativ dazu kann durch Positionssensoren 93 in den Hydraulikzylindern 22, 23 ermittelt werden, ob der jeweilige Hydraulikzylinder 22, 23 noch eine Stellweg s (Fig. 4) zurücklegt oder nicht. Falls nicht, wird daraus gefolgert, dass im Hydrauliksystem ein Umgebungsdruck p_{U} vorliegt.

Anschließend startet zum Zeitpunkt t_{S} (Fig. 4) der Diagnose-Ladebetrieb, bei dem die Hydraulik-Ladepumpe 53 mit einer konstanten Lade-Drehzahl n_{L} (Fig. 4, unteres Diagramm) angesteuert wird. Exemplarisch wird zunächst mittels des im ersten Kupplungspfad 31 angeordneten Drucksensors 34 der Ist-Speicherdruckverlauf p_{S}(t) erfasst, wie er in der Fig. 4, mittleres Diagramm wiedergegeben ist. Demzufolge erhöht sich der Speicherdruck ps bis zu dem Vorspanndruck-Zeitpunkt tv, bei dem der vom Drucksensor 34 erfasste Ist-Speicherdruck p_{S}(tᵥ) den Druckspeicher-Vorspanndruck p_{V} erreicht hat.

Wie oben bereits angedeutet, ist bei einer fehlerfreien Druckspeicher-Funktion der im Vorspanndruck-Zeitpunkt t_{V} erfasste Ist-Speicherdruck ps(tv) (unter Berücksichtigung von Temperaturabhängigkeiten) identisch mit einem Referenz-Vorspanndruck p_{VRef}. Bei einer signifikanten Abweichung zwischen dem im Vorspanndruck-Zeitpunkt t_{V} erfassten Ist-Speicherdruck p_{S}(t_{V}) und dem Referenz-Vorspanndruck p_{VRef} stellt die Auswerteeinheit 80 einen Vorspanndruck-Fehler fest. Im weiteren Diagnose-Ladebetrieb wird nach dem Vorspanndruck-Zeitpunkt t_{V} die Ölkammer 26 des Druckspeichers 25 gefüllt, und zwar unter Verstellung des Druckkolbens 28.

Wie aus der Fig. 4, mittleres Diagramm, hervorgeht, steigt im Diagnose-Ladebetrieb der Ist-Speicherdruckverlauf p_{S}(t) bis zum Erreichen des Vorspanndrucks pv im Druckspeicher 25 (d.h. bis zum Vorspanndruck-Zeitpunkt t_{V}) mit einem steilen Druckgradienten ṗ₁ an. Im weiteren Verlauf (d.h. nach dem Vorspanndruck-Zeitpunkt t_{V}) steigt der Ist-Speicherdruckverlauf p_{S}(t) dagegen lediglich mit einem flacheren Druckgradienten ṗ₂ an. Diese für den Druckspeicher 25 charakteristische Ladekurve wird zur Ermittlung des Vorspanndruck-Zeitpunkts t_{V} wie folgt genutzt: So erfasst die Auswerteeinheit 80 die Druckgradienten ṗ₁, ṗ₂ des Ist-Speicherdruckverlaufes p_{S}(t). Bei Erfassen einer stufenartigen Gradienten-Änderung zwischen den Druckgradienten ṗ₁ und ṗ₂ erkennt die Auswerteeinheit 80 den Vorspanndruck-Zeitpunkt t_{V}.

Sofern in der obigen Vorspanndruck-Diagnose kein Vorspanndruck-Fehler erkannt wird, erfolgt unmittelbar anschließend die Kupplungspfad-Diagnose: Hierzu wird einfach der während der Druckspeicher-Diagnose erfolgende Diagnose-Ladebetrieb fortgesetzt, bis der Drucksensor 34 einen oberen Schwellwert pₘₐₓ (Fig. 4, mittleres Diagramm) erreicht. Der obere Schwellwert pₘₐₓ liegt in der Fig. 4, mittleres Diagramm, um eine Druckdifferenz Δp über dem Vorspanndruck pv des Druckspeichers 25. Nach dem Ende des Diagnose-Ladebetriebs vergleicht eine zweite Auswerteeinheit 82 einen Druckgradienten ṗ₃ des Ist-Speicherdruckverlauf p_{S}(t) mit einem Referenz-Druckgradienten ṗ_{Ref}, der temperaturabhängig in einem Kennfeld 84 (Fig. 3) im Diagnosemodul 79 hinterlegt ist. Die Auswerteeinheit 82 ermittelt aus dem Vergleich, ob ein fehlerfreier oder fehlerbehafteter leckagebedingter Druckabfall im Ist-Speicherdruckverlauf p_{S}(t) vorliegt.

Es ist hervorzuheben, dass die Kupplungspfad-Diagnose nur unter der Bedingung erfolgt, dass die Auswerteeinheit 80 keinen Vorspanndruck-Fehler feststellt. Bei Fehlerfreiheit im Druckspeicher 25 können fehlerhafte Leckagen eindeutig dem Kupplungspfad 31 zugewiesen werden. Sowohl bei der Druckspeicher-Diagnose als auch bei der Kupplungspfad-Diagnose ist das in der Verbindungsleitung 37, die die Hauptleitung 27 mit den Gangstellerpfaden 32 verbindet, angeordnete Druckregelventil 36 geschlossen.

Zur Plausibilisierung des in der Vorspanndruck-/Kupplungspfad-Diagnose erzielten Ergebnisses kann der oben anhand des ersten Kupplungspfads 31 dargelegte Diagnosebetrieb doppelt durchgeführt werden, und zwar im Rahmen einer ersten Teildiagnose A mit Hilfe des im ersten Kupplungspfad 31 angeordneten Drucksensors 34 sowie mit dem im zweiten Kupplungspfad 32 geschlossenen Kupplungsventil 35. Anschließend kann der obige Diagnosebetrieb im Rahmen einer zweiten Teildiagnose B durchgeführt werden, und zwar mit dem im zweiten Kupplungspfad 30 angeordneten Drucksensor 34 und mit dem im ersten Kupplungspfad 31 geschlossenen Kupplungsventil 35.

Das Diagnosemodul 79 kann bei Vorliegen gleicher Fehler sowohl in der ersten Teildiagnose A als auch in der zweiten Teildiagnose B einen Druckspeicher-Fehler erkennen sowie mit großer Wahrscheinlichkeit einen Kupplungspfad-Fehler ausschließen. Bei Vorliegen unterschiedlicher Fehler-Ergebnisse kann das Diagnosemodul 79 einen Leckage-Fehler in einem der beiden Kupplungspfade 30, 31 erkennen.

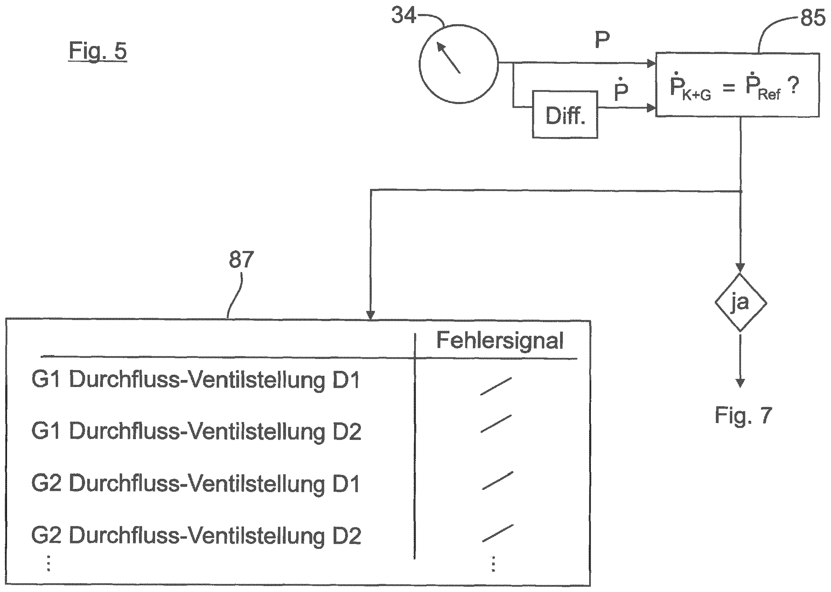

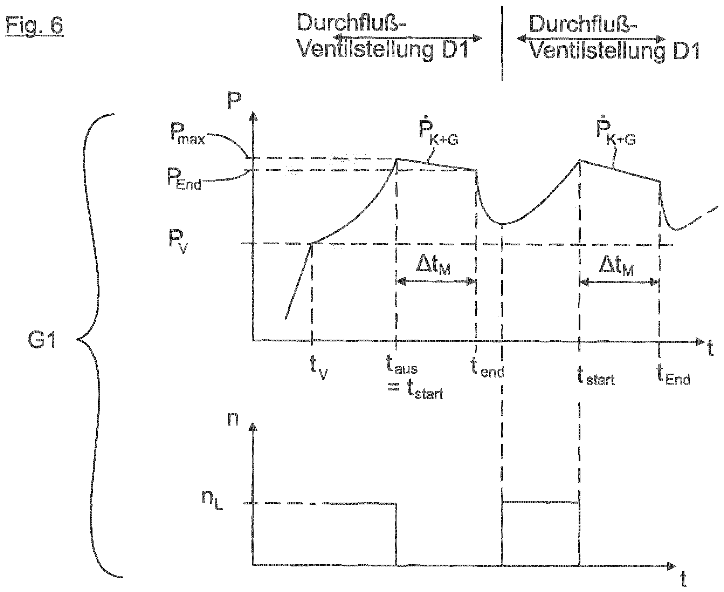

In der Figur 5 sind die für eine Gangstellerpfad-Diagnose erforderlichen Programmbausteine des Diagnosemoduls 79 in einem grob vereinfachten Blockschaltbild gezeigt. Die Gangstellerpfad-Diagnose wird als eine Folge-Diagnose zeitlich unmittelbar nach der Kupplungspfad-Diagnose (Fig. 3) durchgeführt, und zwar unter der Bedingung, dass in der Kupplungspfad-Diagnose zumindest ein Kupplungspfad 30, 31 mit fehlerfreier Leckage erkannt ist. Der Drucksensor 34 des als fehlerfrei eingestuften Kupplungspfades 30, 31 (nachfolgend als Referenz-Kupplungspfad bezeichnet) wird für die anhand der Figuren 5 und 6 veranschaulichte Gangstellerpfad-Diagnose genutzt.

Wie aus der Figur 5 hervorgeht, weist das Diagnosemodul 79 eine dritte Auswerteeinheit 85 auf, an deren Signaleingang ein vom Drucksensor 34 erfasster Ist-Speicherdruck p_{S}(t) und ein Ist-Speicherdruck-Gradient p anliegt. Mittels der Auswerteeinheit 85 wird das Leckage-Verhalten jedes der Gangstellerpfade 32 separat geprüft. Gegebenenfalls erfasste Leckage-Fehler werden in dem Fehlerspeicher 87 hinterlegt.

Nachfolgend wird anhand der Figuren 5 und 6 die Gangstellerpfad-Diagnose beschrieben: So öffnet das Diagnosemodul 79 zunächst das im Referenz-Kupplungspfad 30 angeordnete Kupplungsventil 35, um den Ist-Speicherdruckverlauf p_{S}(t) zu erfassen. Zudem wird das Druckregelventil 36 in der Verbindungsleitung 37 des Hydrauliksystems geöffnet, um zwischen dem im Referenz-Kupplungspfad 30 angeordneten Drucksensor 34 und den Gangstellerpfaden 32 eine Druckverbindung herzustellen. Anschließend erfolgt ein Diagnose-Ladebetrieb durch Aktivierung der Lade-Hydraulikpumpe 53. Im Diagnose-Ladebetrieb wird der Ist-Speicherdruck p_{S}(t) bis auf den oberen Schwellwert pₘₐₓ (Figur 6) zum End-Zeitpunkt tₐᵤₛ erhöht. Nach dem Ende des Diagnose-Ladebetriebs, das heißt zum End-Zeitpunkt tₐᵤₛ (Figur 6), erfasst der Drucksensor 34 während eines Meßzeitintervalls Δt_{M} einen Druckgradienten ṗ_{K+G} des Speicherdruckverlaufes ps(t). Die Auswerteeinheit 85 vergleicht den Druckgradienten ṗ_{K+G} mit einem Referenz-Druckgradienten ṗ_{Ref} und wertet aus, ob ein fehlerfreier oder fehlerbehafteter Druckabfall (das heißt eine Gangsteller-Leckage) im Speicherdruckverlauf p_{S}(t) vorliegt.

Wie in der Figur 2a gezeigt, ist jedes der in den Gangstellerpfaden 32 angeordneten Gangstellerventile 38 zwischen einer Sperr-Ventilstellung S und zwei Durchfluss-Ventilstellungen D1, D2 verstellbar. Die Gangstellerpfad-Diagnose erfolgt im zu prüfenden Gangstellerpfad 32 für jede der Durchfluss-Ventilstellungen D1 und D2 separat. Das heißt, dass in jedem Gangstellerpfad 32 die Gangsteller-Diagnose sowohl in der ersten Durchfluss-Ventilstellung D1 des Gangstellerventils 38 als auch in der zweiten Durchfluss-Ventilstellung D2 des Gangstellerventils 38 durchgeführt wird. Die Gangstellerventile 38 in den verbleibenden Gangstellerpfaden 32 bleiben dagegen in die Sperr-Ventilstellung S geschaltet, um die Meßgenauigkeit bei der Diagnose des zu prüfenden Gangstellerpfads 32zu erhöhen. Der im Meßzeitintervall Δt_{M} vom Drucksensor 34 erfasste Druckgradient ṗ_{K+G} gibt daher den gemeinsamen Druckabbau sowohl im Referenz-Kupplungspfad 30 als auch im zu prüfenden Gangstellerpfad 32 wieder, dessen Gangstellerventil 38 in eine der beiden Durchflußstellungen D1, D2 geschaltet ist.

Der Referenz-Druckgradient ṗ_{Ref} wird aus einer Kennfeld-Datenbank gelesen, z.B. aus der bereits in der Figur 3 gezeigten Kennfeld-Datenbank 83. In diesem Fall würde der auslesbare Referenz-Druckgradient ṗ_{Ref} einer fehlerfreien Basisleckage des Referenz-Kupplungspfades 30 entsprechen. In der Auswerteeinheit 85 werden nicht nur die Druckgradienten ṗ_{K+G} erfasst, sondern zusätzlich auch Absolut-Druckwerte, das heißt der Ist-Speicherdruck p_{S}(t_{Start}) zum Startzeitpunkt t_{Start} als auch der Ist-Speicherdruck p_{S}(t_{End}) zum Mess-Endzeitpunkt t_{End} des Messzeitintervalls Δt_{M}. In diesem Fall erkennt die Auswerteeinheit 85 einen fehlerfreien Gangstellerpfad 32, wenn die Bedingungen erfüllt sind, dass erstens eine ausreichend große Speicherdruckdifferenz zwischen dem Start- und Endzeitpunkt t_{Start}, t_{End} vorliegt und dass zweitens der Druckgradient ṗ_{K+G} dem Referenz-Druckgradienten ṗ_{Ref} entspricht.

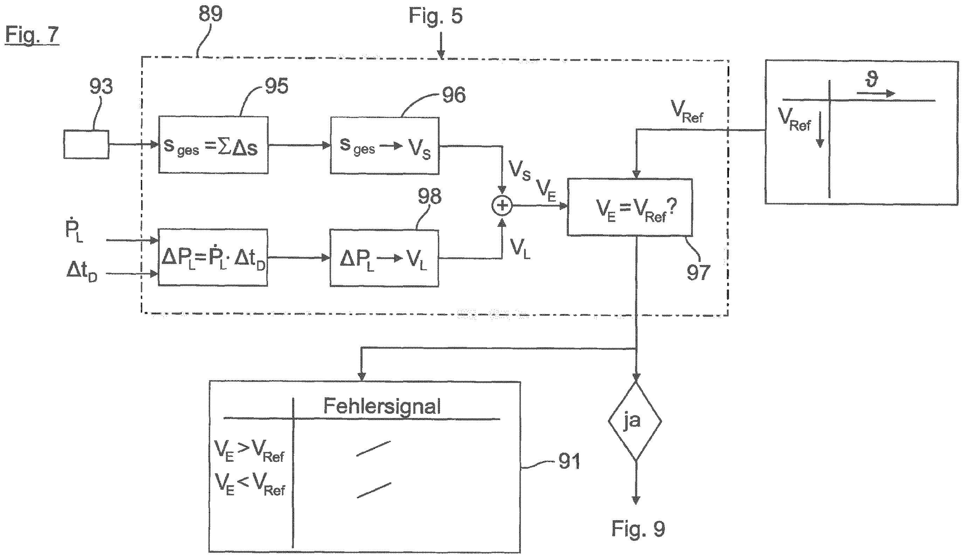

In der Figur 7 sind die für eine Speichervolumen-Diagnose erforderlichen Programmbausteine des Diagnosemoduls 79 in einem grob vereinfachten Blockschaltbild gezeigt. Die Speichervolumen-Diagnose wird als eine Folge-Diagnose zeitlich unmittelbar nach der Gangsteller-Diagnose (Figuren 5 und 6) durchgeführt, und zwar unter der Bedingung, dass in der Gangsteller-Diagnose zumindest ein Gangstellerpfad 32 der Gangsteller G1 bis G4 als fehlerfrei erkannt ist und somit für die Speichervolumen-Diagnose als ein Referenz-Gangstellerpfad nutzbar ist.

Wie aus der Figur 7 hervorgeht, weist das Diagnosemodul 79 eine Auswerteeinheit 89 auf, die in einem Vergleicher-Baustein 97 eine bei der Speichervolumen-Diagnose ermittelte Hydraulikflüssigkeits-Entnahme V_{E} mit einem Referenz-Speichervolumen V_{ref} vergleicht. Bei Vorliegen einer signifikanten Abweichung wird ein Speichervolumen-Fehler erkannt und im Fehlerspeicher 91 abgespeichert. Das Referenz-Speichervolumen V_{ref} ist aus einem Speichervolumen-Kennfeld einer Datenbank auslesbar, in dem die Referenzwerte temperaturabhängig hinterlegt sind.

Wie aus der Figur 7 weiter hervorgeht, ist die Auswerteeinheit 89 in Signalverbindung mit einem Positionssensor 93 des im Referenz-Gangstellerpfad 32 angeordneten Gangsteller-Hydraulikzylinders 22. Während der Speichervolumen-Diagnose wird das Gangstellerventil 38 im Referenz-Gangstellerpfad 32 angesteuert, wobei der Positionssensor 93 die Stellwege Δs des Gangsteller-Hydraulikzylinders 22 erfasst. Diese werden in einem Stellweg-Integrator 95 zu einem Gesamt-Stellweg s_{ges} aufintegriert. Der Gesamt-Stellweg s_{ges} wird in einem Wandler-Baustein 96 in ein Gesamt-Schluckvolumen V_{S} umgerechnet. Zu dem Gesamt-Schluckvolumen V_{S} wird ein während der Speichervolumen-Diagnose abfließendes Hydraulikflüssigkeits-Leckagevolumen V_{L} addiert. Die sich daraus ergebende Hydraulikflüssigkeits-Entnahme V_{E} wird zum oben erwähnten Vergleicher-Baustein 97 geleitet.

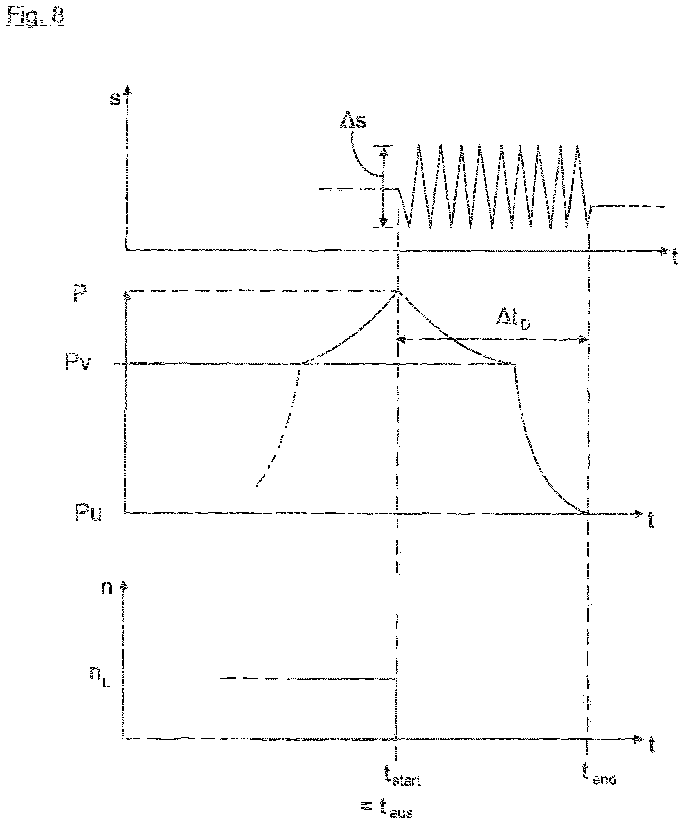

Die Speichervolumen-Diagnose wird wie folgt durchgeführt: Zunächst wird der Druckspeicher 25 in einem Diagnose-Ladebetrieb komplett mit Hydraulikflüssigkeit gefüllt. Der Diagnose-Ladebetrieb ist ein Blindladevorgang, der in einer bestimmten Zeit t erfolgt. Anschließend wird ab einem Start-Zeitpunkt tₛₜₐᵣₜ (stimmt in der Fig. 8 mit dem Ausschalt-Zeitpunkt tₐᵤₛ überein) der Referenz-Hydraulikzylinder 22 in einem Diagnose-Zeitintervall Δt_{D} so lange intermittierend betätigt, bis aufgrund der aus dem Hydrauliksystem genommenen Leckage- und Schluckvolumina V_{L} und V_{S} ein Umgebungsdruck pu im Hydrauliksystem vorliegt. Der Umgebungsdruck pu wird nicht über einen Drucksensor gemessen, sondern indirekt im Diagnosemodul 79 erkannt, und zwar zu dem End-Zeitpunkt t_{end} (Fig. 8) des Diagnose-Zeitintervall Δt_{D}, zu dem der Positionssensor 93 trotz Durchfluss-Ventilstellung D1, D2 des Referenz-Steuerventils 35 keinen Stellweg Δs mehr erfasst wird.

Während der Druckspeichervolumen-Diagnose ist einer der Kupplungspfade 30, 31 als Referenz-Kupplungspfad sowie der zum Referenz-Hydraulikzylinder 22 führende Referenz-Gangstellerpfad 32 mit dem im Hydrauliksystem vorherrschenden Speicherdruck ps beaufschlagt. Die Hydraulikzylinder 22 der anderen Gangstellerpfade 32 sowie des anderen Kupplungspfads sind dagegen vom Speicherdruck ps entkoppelt.
Die Ermittlung des Leckagevolumens V_{L} kann auf der Grundlage der bei den vorangegangenen Diagnosen erfassten Druckgradienten am Kupplungspfad 30 sowie am Referenz-Gangsteller 22 erfolgen (z.B. der Druckgradient ṗ_{K+G} aus der Gangstellerpfad-Diagnose gemäß den Fig. 5 und 6). Der Druckgradient ṗ_{L} wird in der Auswerteeinheit 89 mit dem Diagnose-Zeitintervall Δt_{D} multipliziert. Die so erhaltene Druckdifferenz Δp_{L} wird in einem Wandler 98 in das Leckagevolumen V_{L} umgewandelt.

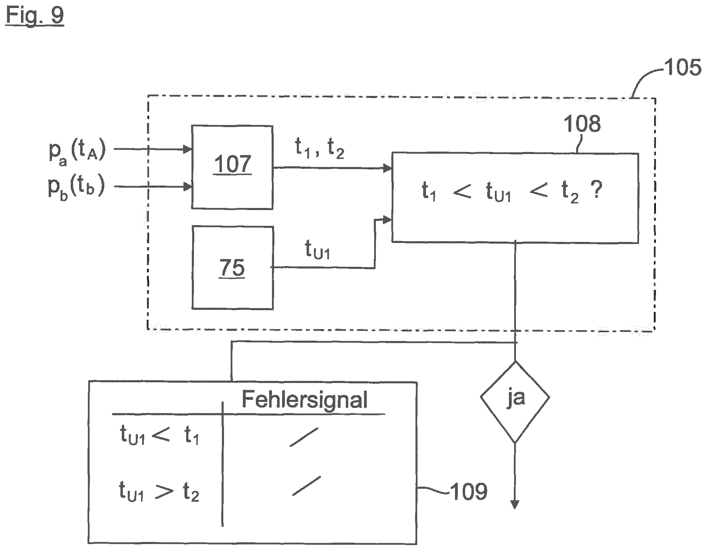

In der Figur 9 sind die für eine Umschaltzeitpunkt-Diagnose am Speicherladeventil 71 erforderlichen Programmbausteine des Diagnosemoduls 79 in einem grob vereinfachten Blockschaltbild gezeigt. Die Umschaltzeitpunkt-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 9 hervorgeht, weist das Diagnosemodul 79 eine Auswerteinheit 105 auf, mit der im Rahmen der Umschaltzeitpunkt-Diagnose geprüft wird, ob ein erster Umschaltzeitpunkt t_{U1}, zu dem das Speicherladeventil 71 selbsttätig von seiner Ladestellung L in seine Nichtladestellung K schaltet, sowie ein zweiter Umschaltzeitpunkt t_{U2}, zu dem das Speicherladeventil 71 selbsttätig von seiner Nichtladestellung K in seine Ladestellung schaltet, plausibel ist. Hierzu ermittelt die Auswerteeinheit 105, ob zum ersten Umschaltzeitpunkt t_{U1} der Ist-Speicherdruck p_{S}(t) im Bereich des oberen Druckschwellwertes pₘₐₓ liegt. Zudem ermittelt die Auswerteeinheit 105, ob der zum zweiten Umschaltzeitpunkt t_{U2} der Ist-Speicherdruck p_{S}(t) im Bereich des unteren Druckschwellwerts pₘᵢₙ liegt.

Zur Erfassung der beiden Umschaltzeitpunkt t_{U1} und t_{U2} wird die Strommesseinrichtung 75 des Elektromotors 57 genutzt. Die Strommesseinrichtung 75 erfasst eine Ist-Stromaufnahme I(t) des Elektromotors 57. Dabei legt die Steuereinheit 39 einen Wechsel-Zeitpunkt von einer hohen Stromaufnahme Iₘₐₓ zu einer niedrigen Stromaufnahme Iₘᵢₙ als ersten Umschaltzeitpunkt t_{U1} fest. Ein Wechsel-Zeitpunkt von der niedrigen Stromaufnahme Iₘᵢₙ zur hohen Stromaufnahme Iₘₐₓ wird als zweiter Umschaltzeitpunkt t_{U2} festgelegt.

Zur Erfassung des Ist-Speicherdruckes p_{S}(t) wird der Kupplungspfad-Drucksensor 34 genutzt. Dessen Messbereich Δpₘₑₛₛ (Figur 11) liegt in der Figur 11 außerhalb, das heißt unterhalb der Druckschwellwerte pₘₐₓ und pₘᵢₙ. Eine unmittelbare Erfassung des Ist-Speicherdruckes p_{S} zu den beiden Umschaltzeitpunkten t_{U1} und t_{U2} ist somit nicht möglich, da der Ist-Speicherdruck zu den beiden Umschaltzeitpunkten außerhalb des Messbereiches Δpₘₑₛₛ liegt.

In der Figur 9 erfolgt die Ermittlung des Ist-Speicherdruckes p_{S}(t) zu den Umschaltzeitpunkten t_{U1} und t_{U2} durch Abschätzung, und zwar mit Hilfe eines Extrapolier-Bausteins 107. Im Extrapolier-Baustein 107 wird auf der Grundlage gemessener Druckwerte pₐ(tₐ) und p_{b}(t_{b}) im SpeicherdruckVerlauf die noch innerhalb des Drucksensor-Messbereiches (Δpₘₑₛₛ) liegen, ein Zeitfenster Δtₛₒₗₗ abgeschätzt. Innerhalb des Zeitfensters Δtₛₒₗₗ liegt bei einwandfreiem Speicherladeventil-Betrieb der erste Umschaltzeitpunkt t_{U1}. Das Zeitfenster Δtₛₒₗₗ wird in der Figur 9 und 11 durch die beiden Zeitpunkte t₁ und t₂ begrenzt. Im nachgeschalteten Vergleicherbaustein 108 wird ermittelt, ob der erste Umschaltzeitpunkt t_{U1} innerhalb oder außerhalb des Zeitfensters Δtₛₒₗₗ liegt. Sofern der erste Umschaltzeitpunkt t_{U1} außerhalb des Zeitfensters Δtₛₒₗₗ liegt, wird ein Fehlerfall erkannt und dieser in dem Fehlerspeicher 109 hinterlegt.

In der Figur 9 ist in den Programmbausteinen lediglich eine Teildiagnose gezeigt, bei der geprüft wird, ob der erste Umschaltzeitpunkt t_{U1} im Zeitfenster Δtₛₒₗₗ liegt oder nicht. In gleicher Weise prüft die Auswerteeinheit 105, ob der zweite Umschaltzeitpunkt t_{U2} innerhalb eines abgeschätzten Zeitfensters liegt oder nicht.

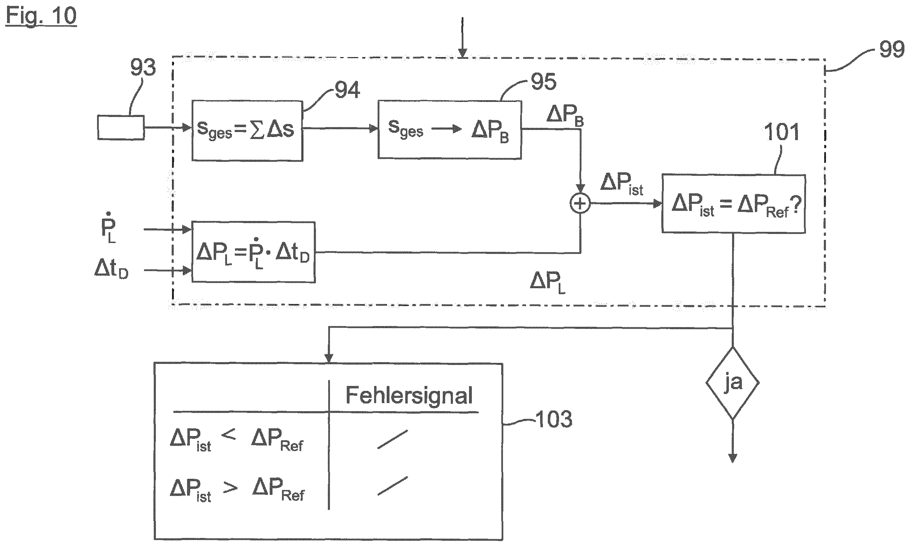

In der Figur 10 sind die für eine Ventilspreizung-Diagnose erforderlichen Programmbausteine des Diagnosemoduls 79 in einem grob vereinfachten Blockschaltbild gezeigt. Die Ventilspreizung-Diagnose wird als eine Folge-Diagnose zeitlich unmittelbar nach der Umschaltzeitpunkt-Diagnose (Figur 9) durchgeführt, und zwar unter der Bedingung, dass in der Umschaltzeitpunkt-Diagnose zumindest ein plausibler Umschaltzeitpunkt t_{U1} des Ladespeicherventils 71 erkannt worden ist.

Das Diagnosemodul 79 weist in der Fig. 10 eine Auswerteeinheit 99 auf, die bei der Ventilspreizung-Diagnose eine Ist-Ventilspreizung Δpᵢₛₜ zwischen dem unteren und dem oberen Druckschwellwert pₘᵢₙ und pₘₐₓ ermittelt. Ein Vergleicherbaustein 101 der Auswerteeinheit 99 vergleicht die Ist-Ventilspreizung Δpᵢₛₜ mit einer Soll-Ventilspreizung Δp_{Ref}. Bei Vorliegen einer signifikanten Abweichung wird ein Fehlerfall erkannt und in dem Fehlerspeicher 103 hinterlegt.

Zur Ermittlung der Ist-Ventilspreizung Δpᵢₛₜ legt die Auswerteeinheit 99 ein Diagnosezeitintervall Δt_{D} fest. Das Diagnosezeitintervall Δt_{D} startet mit dem ersten Umschaltzeitpunkt t_{U1} und endet mit dem folgenden zweiten Umschaltzeitpunkt t_{U2}. Innerhalb des oben definierten Diagnosezeitintervalls Δt_{D} aktiviert das Diagnosemodul 79 einen Referenz-Hydraulikzylinder 22, der gemäß der Figur 11 während des Diagnosezeitintervalls Δt_{D} permanent, d.h. intermittierend, hin- und her verstellt wird. Durch die Betätigung des Referenz-Hydraulikzylinders 22 und durch eine systemimmanente Hydrauliksystem-Leckage erfolgt während des Diagnosezeitintervalls Δt_{D} eine Speicherdruck-Abnahme Δp_{E}, die der Ist-Ventilspreizung Δpᵢₛₜ entspricht.

Die Ermittlung der Speicherdruck-Abnahme Δp_{E}, das heißt der Ist-Ventilspreizung Δpᵢₛₜ, erfolgt anhand der in der Figur 10 gezeigten Programmbausteine: Demzufolge werden vom Positionssensor 93 die Kolben-Stellwege Δs während des Diagnosezeitintervalls Δt_{D} in einem Integrator 94 zu einem Gesamt-Stellweg s_{ges} aufintegriert. Daraus wird in einem Wandler-Baustein 95 die mit der Gangsteller-Betätigung verbundene Druckabnahme Δp_{B} berechnet. Die mit der Gangsteller-Betätigung verbundene Druckabnahme Δp_{B} wird in einem Summierglied mit der leckagebedingten Druckabnahme Δp_{L} addiert, woraus sich die Speicherdruck-Abnahme Δp_{E} während des Diagnosezeitintervalls Δt_{D} ergibt. Die leckagebedingte Druckabnahme Δp_{L} des Referenz-Hydraulikzylinders 22 ist bereits bei vorangegangenen Diagnosen ermittelt worden.

Wie aus der Figur 2a hervorgeht, ist den beiden Kupplungspfaden 30, 31 ein von der elektronischen Steuereinheit 39 ansteuerbares Sicherheitsventil 28 vorgeschaltet. Das Sicherheitsventil 28 kann zwischen einer Schließstellung und einer Durchflussstellung betätigt werden. In der Schließstellung sind die beiden Kupplungspfade 30, 31 vom Druckspeicher 25 druckentkoppelt. In der Durchflussstellung sind die beiden Kupplungspfade 30, 31 mit dem Speicherdruck p_{S} beaufschlagbar. Sofern die Steuereinheit 39 eine Fehlfunktion des Kupplungsventils 35 in zumindest einem der Kupplungspfade 30, 31 erfasst, kann aus Sicherheitsgründen das Sicherheitsventil 28 in seine Schließstellung verstellt werden. Im normalen Fahrbetrieb ist das Sicherheitsventil 28 permanent in seiner Durchflussstellung.

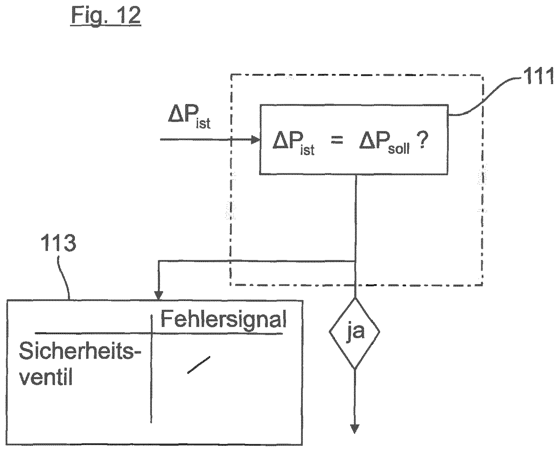

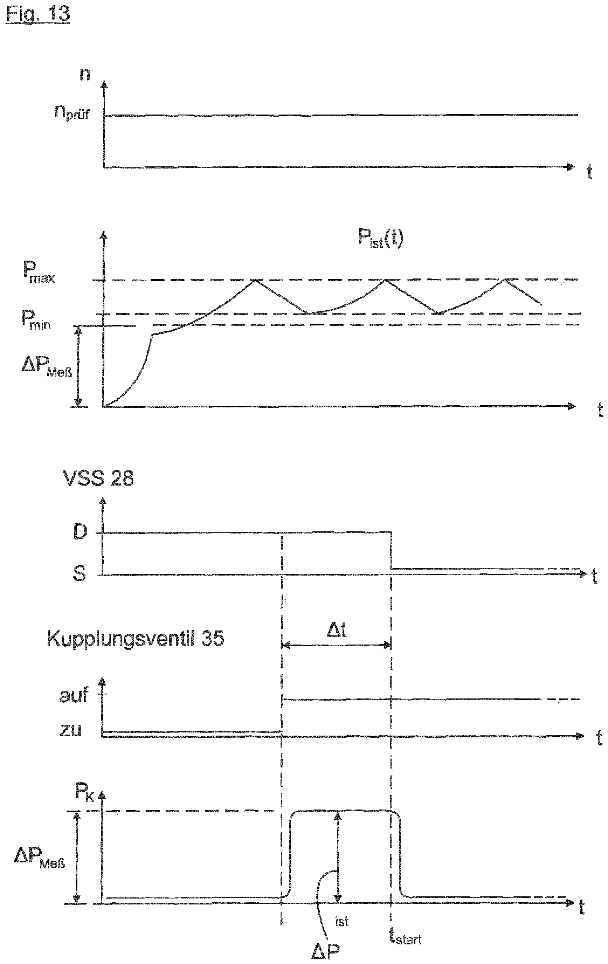

In der Figur 12 sind die für eine Sicherheitsventil-Diagnose erforderlichen Programmbausteine des Diagnosemoduls 79 in einem vereinfachten Blockschaltbild gezeigt. Die Sicherheitsventil-Diagnose kann unabhängig von anderen Diagnoseschritten durchgeführt werden. Bei der Sicherheitsventil-Diagnose wird das Sicherheitsventil 28 zu einem Diagnose-Startzeitpunkt t_{Start} (Figur 13) von der Durchflussstellung in die Schließstellung geschaltet, wodurch sich eine Ist-Druckabnahme Δpᵢₛₜ stromab des Sicherheitsventils 28 einstellt. Das Diagnosemodul 79 weist eine Auswerteeinheit 111 auf, die diese Ist-Druckabnahme Δpᵢₛₜ mit einer Soll-Druckabnahme Δpₛₒₗₗ vergleicht. Bei Vorliegen einer signifikanten Abweichung wird ein Fehlerfall erkannt und in einem Sicherheits-Fehlerspeicher 113 hinterlegt.

Zur Erfassung der Ist-Druckabnahme Δpᵢₛₜ kann der bereits oben erwähnte Kupplungs-Drucksensor 34 genutzt werden.

Nachfolgend wird anhand der Figur 12 und 13 die Durchführung der Sicherheitsventil-Diagnose erläutert: Für eine einwandfreie Meßgenauigkeit wird die Hydraulikpumpe 53 mit einer Konstantdrehzahl n_{prüf} angesteuert, um im Hochdruckkreislauf H einen ausreichend großen Speicherdruck p_{S} zu gewährleisten, der sich gemäß der Figur 13 zwischen den oberen und unteren Druckschwellwerten pₘₐₓ und pₘᵢₙ bewegt. Das Kupplungsventil 35 eines Referenz-Kupplungspfades 30 oder 31 wird um einen Zeitversatz Δt vor dem oben erwähnten Startzeitpunkt tstart in seine Durchflussstellung verstellt, damit der Drucksensor 34 zwischen dem Kupplungsventil 35 und dem Kupplungs-Hydraulikzylinder 23 die Ist-Druckabnahme Δpᵢₛₜ erfassen kann. Während des Zeitversatzes Δt wird vom Drucksensor 34 nicht der tatsächlich am Kupplungs-Hydraulikzylinder 22 anliegende Hydraulikdruck zur Auswerteeinheit 111 (Fig. 12) ausgelesen, sondern vielmehr ein oberer Grenzdruck des Messbereiches Δpₘₑₛₛ.

Zum Diagnose-Startzeitpunkt tstart wird das Sicherheitsventil 28 von seiner Durchflussstellung D in seine Schließstellung S geschaltet. Die daraus resultierende Druckabnahme pᵢₛₜ wird vom Drucksensor 34 erfasst und in der Auswerteeinheit 111 mit der Soll-Druckabnahme verglichen.

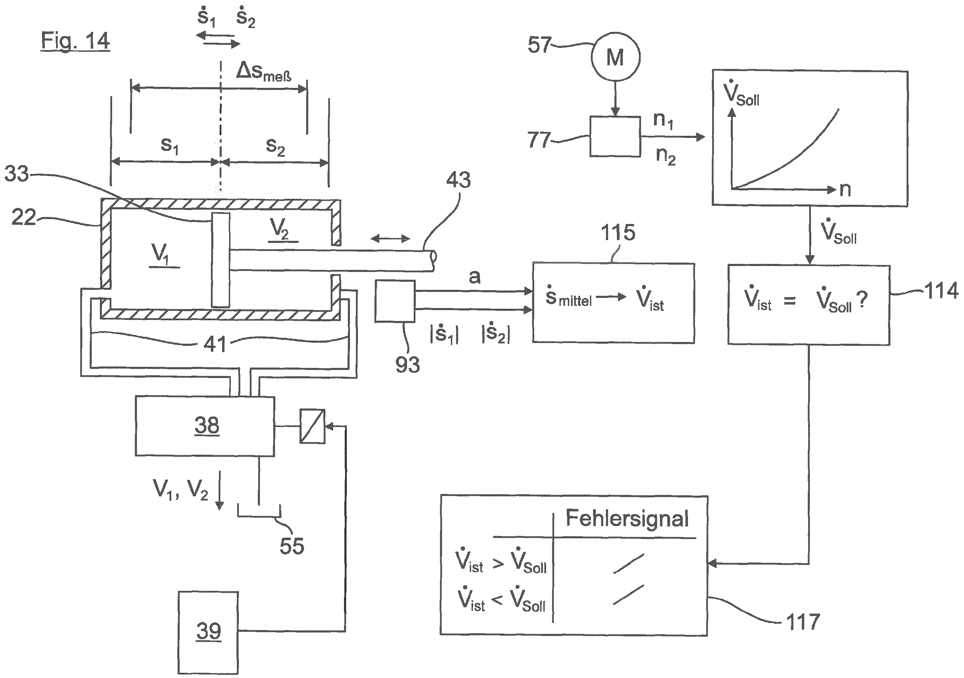

In der Figur 14 sind die für die Fördervolumenstrom-Diagnose erforderlichen Programmbausteine des Diagnosemoduls 79 in einem grob vereinfachten Blockschaltbild gezeigt. Die Fördervolumenstrom-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 14 hervorgeht, wird für die Diagnose ein Gangsteller-Hydraulikzylinder 22 genutzt, der über den Gangsteller 32 mit dem Drucksensor 25 in Verbindung ist. Dem Gangsteller-Hydraulikzylinder 22 ist ein Gangstellerventil 38 vorgelagert, das von der Steuereinheit 39 ansteuerbar ist, um einen am Gangsteller-Hydraulikzylinder 22 anliegenden Hydraulikdruck einzustellen. Das Gangstellerventil 38 ist zwischen zwei Durchflussstellungen D1, D2 verstellbar, um einen Kolben 33 in gegenläufigen Kolbenhüben über die angedeuteten Stellwege s₁, s₂ sowie mit Kolbengeschwindigkeiten ṡ₁, ṡ₂ im Hydraulik-Stellzylinder 22 zu verlagern. Der Kolben 33 unterteilt in der Figur 14 den Hydraulikzylinder in einen kolbenstangenseitigen Arbeitsraum sowie einen davon abgewandten Arbeitsraum, die beide über Hydraulik-Steuerleitungen 41 mit dem Gangstellerventil 38 in Verbindung sind. Mittels der Kolbenstange 43 des Gangsteller-Hydraulikzylinders 22 kann ein nicht gezeigter Gangsteller G1 betätigt werden. Bei einer solchen Gangsteller-Betätigung steuert die elektronische Steuereinheit 39 das Gangstellerventil 38 in an sich bekannter Weise in eine der Durchflussstellungen D1, D2, um eine Kolbenstange-Bewegung zu erzielen. Der Kolbenhub ist mit einer Hydraulikflüssigkeits-Entnahme V₁, V₂ (Schluckvolumen) aus dem Hydrauliksystem verbunden. Aufgrund der bekannten Innengeometrie des Gangsteller-Hydraulikzylinders 22 ist das jeweilige Schluckvolumen V₁, V₂ bekannt. Zudem ist ein Positionssensor 93 vorgesehen, mit dem die Kolbengeschwindigkeit ṡ₁, ṡ₂ im jeweiligen Kolbenhub erfassbar ist.

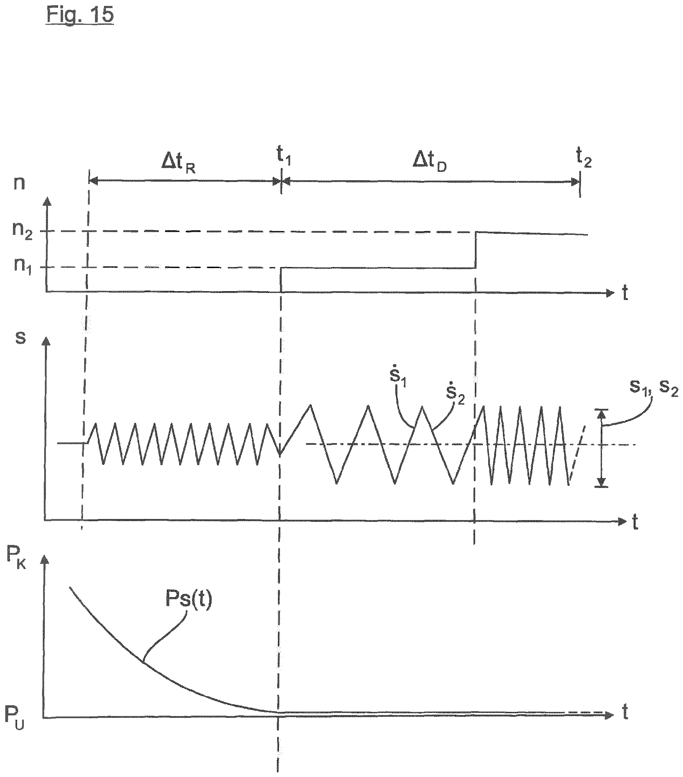

Nachfolgend wird anhand der Figuren 14 und 15 die Fördervolumenstrom-Diagnose beschrieben: So wird zunächst in einem Druckreduzier-Zeitintervall Δt_{R} (Figur 15) zunächst die Hydraulikpumpe 53 deaktiviert und gleichzeitig das Gangstellerventil 38 von der elektronischen Steuereinheit 39 intermittierend angesteuert, wie es in dem mittleren Stellweg-Diagramm der Figur 15 gezeigt ist. Im Druckreduzier-Zeitintervall Δt_{R} wird durch die Ansteuerung vom Gangstellerventil 38 der Gangsteller-Hydraulikzylinder 22 so lange hin- und herbewegt, bis aufgrund von leckagebedingter Hydraulikflüssigkeits-Entnahme und aufgrund betätigungsbedingter Hydraulikflüssigkeits-Entnahme (das heißt Schluckvolumina V₁, V₂) der Speicherdruck p_{S}(t) bis auf den Umgebungsdruck pu reduziert ist. In diesem Zustand ist der Druckspeicher 25 vollständig entleert. Unmittelbar anschließend erfolgt der Start (tₛₜₐᵣₜ) eines Diagnosezeitintervalls Δt_{D}. Im Diagnosezeitintervall Δt_{D} erfolgt ein Ladebetrieb der Hydraulikpumpe 53, bei der diese mit unterschiedlichen Prüf-Drehzahlen n₁ und n₂ angesteuert werden. Gleichzeitig wird das Gangstellerventil 38 zwischen seinen Durchflussstellungen D1, D2 intermittierend verstellt. Dies führt dazu, dass sich der Kolben 33 im Gangsteller-Hydraulikzylinder 22 in gegenläufigen Kolbenhüben über Kolbenstellwege s₁, s₂ sowie mit Kolbengeschwindigkeiten ṡ₁, ṡ₂ im Gangsteller-Hydraulikzylinder 22 hin- und herverlagert.

Der Positionssensor 93 erfasst sowohl die einzelnen Stellwege s₁, s₂ je Kolbenhub sowie die Kolbengeschwindigkeiten ṡ₁, ṡ₂ je Kolbenhub. Zudem wird die Anzahl a (Fig. 14) von Kolbenhüben während des Diagnosezeitintervalls Δt_{D} erfasst. Diese Daten werden zum Signaleingang eines Wandler-Bausteins 115 geleitet, in dem eine mittlere Kolbengeschwindigkeit ṡₘᵢₜₜₑₗ aus der Anzahl a von erfassten Kolbenhüben berechnet wird. Aus der mittleren Kolbengeschwindigkeit ṡₘᵢₜₜₑₗ wird im Wandler-Baustein 115 ein Ist-Fördervolumenstrom Vist berechnet. Der Ist-Fördervolumenstrom Vist wird in einer signaltechnisch nachgeschalteten Auswerteeinheit 113 mit einem Soll-Fördervolumenstrom Vₛₒₗₗ verglichen, und zwar unter Berücksichtigungen der jeweiligen Prüf-Drehzahl n₁ und n₂ während des Diagnosezeitintervalls Δt_{D}. Ergibt sich in der Auswerteeinheit 113 eine signifikante Abweichung, so wird ein Fehlerfall erkannt, der in dem Fehlerspeicher 117 hinterlegt wird.

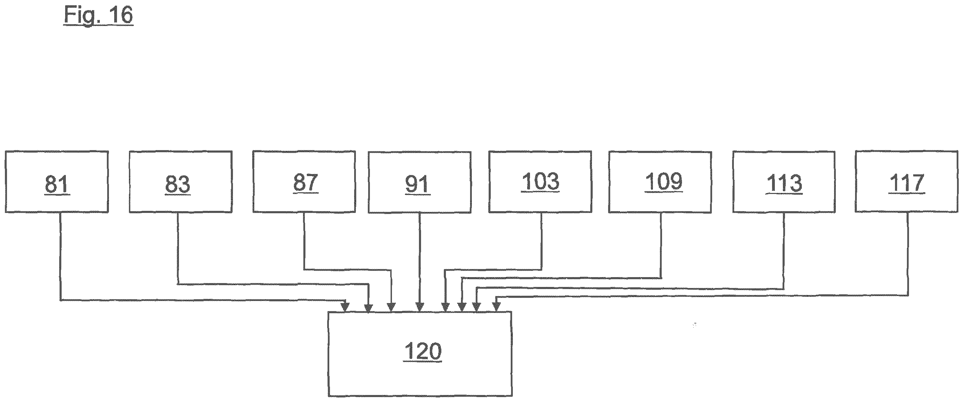

Wie aus der Fig. 16 hervorgeht, sind sämtliche Fehlerspeicher 81, 83, 87, 91, 103, 109, 117 in Signalverbindung mit einer Analyseeinheit 120, in die die in den Fehlerspeichern generierten Fehlersignale auslesbar sind. In der Analyseeinheit 120 ist eine Bewertungsmatrix hinterlegt, in der die Fehlersignale aus den Fehlerspeichern 81, 83, 87, 91, 103, 109, 117 zusammengeführt werden.

Im Hinblick auf eine umfassende Hydrauliksystem-Diagnose bewertet die Analyseeinheit 120 anhand der Bewertungsmatrix sämtliche Fehlersignale in Kombination. In der Analyseeinheit 120 erfolgt somit final eine Gegenüberstellung von Fehlersignalen mit nicht beanstandeten, d.h. fehlerfreien Funktionsdiagnosen, wodurch eine qualifizierte Bewertung der in dem Hydrauliksystem verbauten Komponenten ermöglicht ist. Die Bewertung ist ohne eine Zerlegung des Hydrauliksystems sowie ohne externe Prüfanlagen/Messtechnik ermöglicht. Auf diese Weise wird eine Verkürzung von Reparatur- und Instandsetzungszeiten, eine sichere Detektion defekter Bauteile, eine Reduzierung von Wiederholreparaturen, eine Einsparung von Analyse-Prüfstandkapazitäten durch Prüfung im verbauten Zustand (im Fahrzeug) ohne Zerlegungsaufwand möglich.

## Patentansprüche

1. Hydrauliksystem für ein Automatikgetriebe, insbesondere Doppelkupplungsgetriebe, eines Kraftfahrzeugs, mit einem Hochdruckkreislauf (H), in dem ein Druckspeicher (25), zumindest eine Kupplung (K1, K2) sowie Gangsteller (G1 bis G4) geschaltet sind, und mit einem Niederdruckkreislauf (N) zum Kühlen der Kupplung (K1), wobei der Hochdruckkreislauf (H) und der Niederdruckkreislauf (N) zumindest eine Hydraulikpumpe (53) aufweisen, die über einen Elektromotor (57) antreibbar ist, und mit einer Steuereinheit (39), die bei Erkennen eines Druckspeicher-Ladebedarfs den Elektromotor (57) der Hydraulikpumpe (53) ansteuert, wobei der Hoch- und Niederdruckkreislauf (H, N) über eine Bypassleitung (67) mit integriertem Speicherladeventil (71) verbunden sind, das in einer Nichtladestellung (K) die Hydraulikpumpe (53) strömungstechnisch mit dem Niederdruckkreislauf (N) verbindet und in einer Ladestellung (L) die Hydraulikpumpe (53) strömungstechnisch mit dem Hochdruckkreislauf (H) verbindet, wobei sich das Speicherladeventil (71) zu einem ersten Umschaltzeitpunkt (t_{U1}) selbsttätig von der Ladestellung (L) in die Nichtladestellung (K) verstellt, wenn der Speicherdruck (p_{S}) im Hochdruckkreislauf (H) einen oberen Druckschwellwert (pₘₐₓ) überschreitet, und sich zu einem zweiten Umschaltzeitpunkt (t_{U2}) selbsttätig von der Nichtladestellung (K) in die Ladestellung (L) verstellt, wenn der Speicherdruck (p_{S}) einen unteren Druckschwellwert (pₘᵢₙ) unterschreitet, **dadurch gekennzeichnet, dass** die Steuereinheit (39) ein Diagnosemodul (79) aufweist, mit dem eine Ventilspreizung-Diagnose erfolgt, bei der eine Ist-Ventilspreizung (Δpᵢₛₜ) zwischen dem unteren und oberen Druckschwellwert (pₘᵢₙ, pₘₐₓ) ermittelbar ist, und dass das Diagnosemodul (79) eine Auswerteeinheit (99) aufweist, die die Ist-Ventilspreizung (Δpᵢₛₜ) mit einer Soll-Ventilspreizung (Δpₛₒₗₗ) vergleicht und bei Vorliegen einer signifikanten Abweichung einen Fehlerfall erkennt, der in einem Ventilspreizung-Fehlerspeicher (103) hinterlegbar ist.

2. Hydrauliksystem nach Anspruch 1, **dadurch gekennzeichnet, dass** zur Ermittlung der Ist-Ventilspreizung (Δpᵢₛₜ) die Auswerteeinheit (99) ein Diagnosezeitintervall (Δt_{D}) festlegt, das mit dem ersten Umschaltzeitpunkt (t_{U1}) startet und mit dem zweiten Umschaltzeitpunkt (t_{U2}) endet, und dass in dem Diagnosezeitintervall (Δt_{D}) sowohl durch Betätigung eines Referenz-Hydraulikzylinders (22) als auch durch eine Hydrauliksystem-Leckage eine Speicherdruck-Abnahme (Δpᵢₛₜ) erfolgt, die der Ist-Ventilspreizung entspricht.

3. Hydrauliksystem nach Anspruch 2, **dadurch gekennzeichnet, dass** zur Ermittlung der Speicherdruck-Abnahme (Δpᵢₛₜ) während des Diagnosezeitintervalls (Δt_{D}) der Referenz-Hydraulikzylinder (22) einen Positionssensor (93) aufweist, der die Kolben-Stellwege (Δs) bei Gangsteller-Betätigungen erfasst, und dass das Diagnosemodul (79) die Kolben-Stellwege (Δs) während des Diagnosezeitintervalls (Δt_{D}) zu einem Gesamt-Stellweg (s_{ges}) aufintegriert und daraus die mit den Gangsteller-Betätigungen verbundene Druckabnahme (Δp_{B}) berechnet, und dass die Auswerteeinheit (99) aus der Summe der mit den Gangsteller-Betätigungen verbundenen Druckabnahme (Δp_{B}) und der leckagebedingten Druckabnahme (Δp_{L}) die Speicherdruck-Abnahme (Δp_{E}) ermittelt.

4. Hydrauliksystem nach einem der Ansprüche 1, 2 oder 3, **dadurch gekennzeichnet, dass** in der Ladestellung (L) des Speicherladeventils (71) die Hydraulikpumpe (53) mit hoher Pumpenlast sowie hoher Stromaufnahme (Iₘₐₓ) arbeitet und in der Nichtladestellung (K) die Hydraulikpumpe (53) mit geringer Pumpenlast sowie geringer Stromaufnahme (Iₘᵢₙ) arbeitet.

5. Hydrauliksystem nach Anspruch 4, **dadurch gekennzeichnet, dass** der Steuereinheit (39) eine Strommesseinrichtung (75) zugeordnet ist, mit der eine Ist-Stromaufnahme (I(t)) des Elektromotors (57) erfassbar ist, und dass die Steuereinheit (39) den Wechsel-Zeitpunkt von der hohen Stromaufnahme (Iₘₐₓ) zur niedrigen Stromaufnahme (Iₘᵢₙ) als ersten Umschaltzeitpunkt (t_{U1}) erkennt und den Wechsel-Zeitpunkt von der niedrigen Stromaufnahme (Iₘᵢₙ) zur hohen Stromaufnahme (Iₘₐₓ) als zweiten Umschaltzeitpunkt (t_{U2}) erkennt.

6. Hydrauliksystem nach einem der vorhergehenden Ansprüche, **dadurch gekennzeichnet, dass** der Referenz-Hydraulikzylinder (22) ein Gangsteller-Hydraulikzylinder ist, und dass in einem vom Druckspeicher (25) zum Referenz-Hydraulikzylinder (22) führenden Referenz-Gangstellerpfad (32) ein von der Steuereinheit (39) ansteuerbares Gangstellerventil (38) angeordnet ist, mit dem der Volumenstrom durch den Referenz-Hydraulikzylinder (22) einstellbar ist.

7. Hydrauliksystem nach einem der vorhergehenden Ansprüche, **dadurch gekennzeichnet, dass** die Ventilspreizung-Diagnose als eine Folgediagnose zeitlich nach einer Umschaltzeitpunkt-Diagnose erfolgt, bei der ermittelt wird, ob zum ersten Umschaltzeitpunkt (t_{U1}) der Ist-Speicherdruck (p_{S}(t)) im Bereich des oberen Druckschwellwerts (pₘₐₓ) liegt, wobei ein Fehlerfall in einem Umschaltzeitpunkt-Fehlerspeicher (109) hinterlegbar ist.

8. Hydrauliksystem nach Anspruch 7, **dadurch gekennzeichnet, dass** in zumindest einem vom Druckspeicher (25) zum Kupplungs-Hydraulikzylinder (23) führenden Kupplungspfad (30, 31) ein von der Steuereinheit (39) ansteuerbares Kupplungsventil (35) angeordnet ist, mit dem ein am Kupplungs-Hydraulikzylinder (23) anliegender Hydraulikdruck einstellbar ist, und dass der elektronischen Steuereinheit (39) ein Drucksensor (34) zugeordnet ist, mit dem der am Kupplungs-Hydraulikzylinder (23) anliegende Hydraulikdruck erfassbar ist.

9. Hydrauliksystem nach Anspruch 8, **dadurch gekennzeichnet, dass** der Kupplungspfad-Drucksensor (34) zur Erfassung des Ist-Speicherdrucks (p_{S}(t)) während der Umschaltzeitpunkt-Diagnose genutzt wird.

10. Hydrauliksystem nach Anspruch 9, **dadurch gekennzeichnet, dass** ein Messbereich (Δpₘₑₛₛ) des Drucksensors (34) außerhalb, das heißt unterhalb des oberen Druckschwellwerts (pₘₐₓ) liegt, und dass eine Auswerteeinheit (107) auf der Grundlage gemessener Druckwerte (pₐ(tₐ), p_{b}(t_{b})), die innerhalb des Drucksensor-Messbereichs (Δpₘₑₛₛ) liegen, ein Zeitfenster (Δtₛₒₗₗ) abschätzt, innerhalb dem bei einwandfreiem Ventilbetrieb der erste Umschaltzeitpunkt (t_{U1}) liegt, und dass bei einem ersten Umschaltzeitpunkt (t_{U1}) außerhalb des Zeitfensters (Δtₛₒₗₗ) ein Fehlerfall erkannt ist, der in einem Fehlerspeicher (109) hinterlegbar ist.

11. Hydrauliksystem nach einem der Ansprüche 2 bis 10, **dadurch gekennzeichnet, dass** bei den während des Diagnose-Zeitintervalls (Δt_{D}) mit dem Speicherdruck (p_{S}(t)) beaufschlagten Komponenten, insbesondere Kupplungs-Hydraulikzylinder (23) und/oder Gangsteller-Hydraulikzylinder (22), eine leckagebedingte Druckabnahme (Δp_{L}) erfolgt.

12. Hydrauliksystem nach Anspruch 11, **dadurch gekennzeichnet, dass** die leckagebedingte Druckabnahme (Δp_{L}) anhand vorangegangener Diagnosen oder Leckage-Messungen erfolgt.

13. Hydrauliksystem nach einem der vorhergehenden Ansprüche, **dadurch gekennzeichnet, dass** die Umschaltzeitpunkt-Diagnose als eine Folge-Diagnose zeitlich nach einer Speichervolumen-Diagnose und einer Gangstellerpfad-Diagnose erfolgt.

14. Hydrauliksystem nach Anspruch 13, **dadurch gekennzeichnet, dass** mittels des Diagnosemodul (79) eine Speichervolumen-Diagnose durchführbar ist, bei der eine Auswerteeinheit (89) des Diagnosemoduls (79) ein Ist-Speichervolumen (V_{E}) des Druckspeichers (25) mit einem Referenz-Speichervolumen (V_{ref}) des Druckspeichers (25) vergleicht und bei Vorliegen einer signifikanten Abweichung einen Fehlerfall erkennt, der in einem Speichervolumen-Fehlerspeicher (91) hinterlegbar ist.

## Claims

1. Hydraulic system for an automatic transmission, in particular dual-clutch transmission, of a motor vehicle, comprising a high-pressure circuit (H), in which a pressure accumulator (25), at least one clutch (K1, K2), and gear selectors (G1 to G4) are connected, and comprising a low-pressure circuit (N) for cooling the clutch (K1), wherein the high-pressure circuit (H) and the low-pressure circuit (N) have at least one hydraulic pump (53), which can be driven by an electric motor (57), and comprising a control unit (39), which activates the electric motor (57) of the hydraulic pump (53) when a pressure accumulator charging requirement is identified, wherein the high-pressure and low-pressure circuits (H, N) are connected via a bypass line (67) with integrated accumulator charging valve (71), which in a non-charging position (K) fluidically connects the hydraulic pump (53) to the low-pressure circuit (N) and in a charging position (L) fluidically connects the hydraulic pump (53) to the high-pressure circuit (H), wherein the accumulator charging valve (71) switches automatically from the charging position (L) to the non-charging position (K) at a first switchover time(t_{U1}) if the accumulator pressure (p_{S}) in the high-pressure circuit (H) exceeds an upper pressure threshold value (pₘₐₓ), and switches automatically from the non-charging position (K) to the charging position (L) at a second switchover time (t_{U2}) if the accumulator pressure (p_{S}) drops below a lower pressure threshold value (pₘᵢₙ), **characterised in that** the control unit (39) has a diagnostic module (79), with which a valve spread diagnosis occurs, in which an actual valve spread (Δpᵢₛₜ) between the lower and upper pressure threshold values (pₘᵢₙ, pₘₐₓ) can be determined, and **in that** the diagnostic module (79) has an analysis unit (99), which compares the actual valve spread (Δpᵢₛₜ) with a target valve spread (Δpₛₒₗₗ) and, in the event of a significant deviation, diagnoses an error condition, which can be stored in a valve spread error memory (103).

2. Hydraulic system according to claim 1, **characterised in that** for determining the actual valve spread (Δpᵢₛₜ), the analysis unit (99) specifies a diagnosis time interval (Δt_{D}), which begins at the first switchover time (t_{U1}) and ends at the second switchover time (t_{U2}), and **in that** in the diagnosis time interval (Δt_{D}) an accumulator pressure drop (Δpᵢₛₜ) that corresponds to the actual valve spread occurs, both as a result of actuation of a reference hydraulic cylinder (22) and as a result of hydraulic system leakage.

3. Hydraulic system according to claim 2, **characterised in that**, for determining the accumulator pressure drop (Δpᵢₛₜ) during the diagnosis time interval (Δt_{D}), the reference hydraulic cylinder (22) has a position sensor (93), which detects the piston travel distances (Δs) during gear selector actuations, and **in that** during the diagnosis time interval (Δt_{D}) the diagnostic module (79) integrates the piston travel distances (Δs) to obtain a total travel distance (s_{ges}) and calculates therefrom the pressure drop (Δp_{B}) associated with the gear selector actuations, and **in that** the analysis unit (99) determines the accumulator pressure drop (Δp_{E}) from the sum of the pressure drop (Δp_{B}) associated with the gear selector actuations and the leakage-induced pressure decrease (Δp_{L}).

4. Hydraulic system according to any one of claims 1, 2 or 3, **characterised in that** when the accumulator charging valve (71) is in the charging position (L), the hydraulic pump (53) operates at high pump load and high current consumption (Iₘₐₓ), and in the non-charging position (K) the hydraulic pump (53) operates at low pump load and low current consumption (Iₘᵢₙ).

5. Hydraulic system according to claim 4, **characterised in that** a current measuring device (75), with which an actual current consumption (I(t)) of the electric motor (57) can be detected, is associated with the control unit (39), and **in that** the control unit (39) identifies the changeover time from the high current consumption (Iₘₐₓ) to the low current consumption (Iₘᵢₙ) as the first switchover time (t_{U1}) and the changeover time from the low current consumption (Iₘᵢₙ) to the high current consumption (Iₘₐₓ) as the second switchover time (t_{U2}).

6. Hydraulic system according to any one of the preceding claims, **characterised in that** the reference hydraulic cylinder (22) is a gear selector hydraulic cylinder, and **in that** a gear selector valve (38), which can be controlled by the control unit (39) and with which the volumetric flow through the reference hydraulic cylinder (22) can be adjusted, is arranged in a reference gear selector path (32) leading from the pressure accumulator (25) to the reference hydraulic cylinder (22).

7. Hydraulic system according to any one of the preceding claims, **characterised in that** the valve spread diagnosis occurs as a follow-on diagnosis after a switchover time diagnosis, in which it is determined whether, at the first switchover time (t_{U1}), the actual accumulator pressure (p_{S}(t)) lies in the range of the upper pressure threshold value (pₘₐₓ), wherein an error condition can be stored in a switchover time error memory (109).

8. Hydraulic system according to claim 7, **characterised in that** a clutch valve (35) is arranged in at least one clutch path (30, 31) leading from the pressure accumulator (25) to the clutch hydraulic cylinder (23), which clutch valve can be controlled by the control unit (39) and with which the hydraulic pressure applied to the clutch hydraulic cylinder (23) can be adjusted, and **in that** a pressure sensor (34) is associated with the electronic control unit (39), with which the hydraulic pressure applied to the clutch hydraulic cylinder (23) can be detected.

9. Hydraulic system according to claim 8, **characterised in that** the clutch path pressure sensor (34) is used for detection of the actual accumulator pressure (p_{S}(t)) during the switchover time diagnosis.

10. Hydraulic system according to claim 9, **characterised in that** a measuring range (Δpₘₑₛₛ) of the pressure sensor (34) lies outside, that is to say below, the upper pressure threshold value (pmax), and **in that** an analysis unit (107) estimates, on the basis of measured pressure values (pₐ(tₐ), p_{b}(t_{b})) that lie within the pressure sensor measuring range (Δpₘₑₛₛ), a time window (Δtₛₒₗₗ) within which the first switchover time (t_{U1}) lies during proper functioning of the valve, and **in that** at a first switchover time (t_{U1}) outside of the time window (Δtₛₒₗₗ), an error condition is identified, which can be stored in an error memory (109).

11. Hydraulic system according to any one of claims 2 to 10, **characterised in that** a leakage-induced pressure drop (Δp_{L}) occurs in the components that are pressurised with the accumulator pressure (p_{S}(t)) during the diagnosis time interval (Δt_{D}), in particular clutch hydraulic cylinder (23) and/or gear selector hydraulic cylinder (22).

12. Hydraulic system according to claim 11, **characterised in that** the leakage-induced pressure drop (Δp_{L}) occurs with reference to previous diagnoses or leakage measurements.

13. Hydraulic system according to any one of the preceding claims, **characterised in that** the switchover time diagnosis occurs as a follow-on diagnosis after an accumulator volume diagnosis and a gear selector path diagnosis.

14. Hydraulic system according to claim 13, **characterised in that** an accumulator volume diagnosis can be performed by means of the diagnostic module (79), in which an analysis unit (89) of the diagnostic module (79) compares an actual accumulator volume (V_{E}) of the pressure accumulator (25) with a reference accumulator volume (V_{ref}) of the pressure accumulator (25), and in the event of a significant deviation identifies an error condition, which can be stored in an accumulator volume error memory (91).

## Revendications

1. Système hydraulique pour une transmission automatique, en particulier une transmission à double embrayage, d'un véhicule automobile, avec un circuit à haute pression (H), dans lequel un accumulateur de pression (25), au moins un embrayage (K1, K2) ainsi que des sélecteurs de vitesse (G1 à G4) sont montés, et avec un circuit à basse pression (N) pour le refroidissement de l'embrayage (K1), dans lequel le circuit à haute pression (H) et le circuit à basse pression (N) présentent au moins une pompe hydraulique (53) qui peut être entraînée par le biais d'un moteur électrique (57), et avec une unité de commande (39) qui commande lors de la reconnaissance d'un besoin en charge d'accumulateur de pression le moteur électrique (57) de la pompe hydraulique (53), dans lequel les circuits à haute pression et à basse pression (H, N) sont reliés par le biais d'une conduite de dérivation (67) à une soupape de charge d'accumulateur (71) intégrée qui relie dans une position de non charge (K) la pompe hydraulique (53) en écoulement au circuit à basse pression (N) et relie dans une position de charge (L) la pompe hydraulique (53) en écoulement au circuit à haute pression (H), dans lequel la soupape de charge d'accumulateur (71) se règle à un premier moment de commutation (t_{U1}) automatiquement de la position de charge (L) dans la position de non charge (K), lorsque la pression d'accumulateur (p_{S}) dans le circuit à haute pression (H) dépasse une valeur seuil de pression supérieure (pₘₐₓ), et se règle à un second moment de commutation (t_{U2}) automatiquement de la position de non charge (K) dans la position de charge (L) lorsque la pression d'accumulateur (p_{S}) n'atteint pas une valeur seuil de pression inférieure (pₘᵢₙ), **caractérisé en ce que** l'unité de commande (39) présente un module de diagnostic (79), avec lequel un diagnostic d'écartement de soupape est effectué, pour lequel un écartement de soupape réel (Δp_{réel}) entre la valeur seuil de pression inférieure et supérieure (pₘᵢₙ, pₘₐₓ) peut être déterminé, et que le module de diagnostic (79) présente une unité d'évaluation (99) qui compare l'écartement de soupape réel (Δp_{réel}) avec un écartement de soupape de consigne (Δp_{de consigne}) et reconnaît en présence d'un écart significatif un cas de dysfonctionnement qui peut être enregistré dans une mémoire d'erreurs d'écartement de soupape (103).

2. Système hydraulique selon la revendication 1, **caractérisé en ce que** pour la détermination de l'écartement de soupape réel (Δp_{réel}) l'unité d'évaluation (99) fixe un intervalle de temps de diagnostic (Δt_{D}) qui démarre par le premier moment de commutation (t_{U1}) et se termine par le second moment de commutation (t_{U2}), et que dans l'intervalle de temps de diagnostic (Δt_{D}) une diminution de pression d'accumulateur (Δp_{réel}) est effectuée non seulement par l'actionnement d'un cylindre hydraulique de référence (22) mais aussi par une fuite de système hydraulique, laquelle correspond à l'écartement de soupape réel.

3. Système hydraulique selon la revendication 2, **caractérisé en ce que** pour la détermination de la diminution de pression d'accumulateur (Δp_{réel}) pendant l'intervalle de temps de diagnostic (Δt_{D}) le cylindre hydraulique de référence (22) présente un capteur de position (93) qui détecte les courses de réglage de piston (Δs) en cas d'actionnements de sélecteurs de vitesse, et que le module de diagnostic (79) intègre les courses de réglage de piston (Δs) pendant l'intervalle de temps de diagnostic (Δt_{D}) en une course de réglage entière (S_{ges}) et à partir de celle-ci calcule la diminution de pression (Δp_{B}) reliée aux actionnements de sélecteurs de vitesse, et que l'unité d'évaluation (99) détermine à partir de la somme de la diminution de pression (Δp_{B}) reliée aux actionnements de sélecteurs de vitesse et de la diminution de pression (Δp_{L}) due aux fuites la diminution de pression d'accumulateur (Δp_{E}).

4. Système hydraulique selon l'une des revendications 1, 2 ou 3, **caractérisé en ce que** dans la position de charge (L) de la soupape de charge d'accumulateur (71) la pompe hydraulique (53) travaille avec une charge de pompe élevée ainsi qu'une consommation de courant élevée (Iₘₐₓ) et dans la position de non charge (K) la pompe hydraulique (53) travaille avec une charge de pompe faible ainsi qu'une consommation de courant faible (Iₘᵢₙ).

5. Système hydraulique selon la revendication 4, **caractérisé en ce qu'**à l'unité de commande (39) est associé un dispositif de mesure de courant (75), avec lequel une consommation de courant réelle (I(t)) du moteur électrique (57) peut être détectée, et que l'unité de commande (39) reconnaît le moment de changement de la consommation de courant élevée (Iₘₐₓ) à la consommation de courant faible (Iₘᵢₙ) comme premier moment de commutation (t_{U1}) et reconnaît le moment de changement de la consommation de courant faible (Iₘᵢₙ) à la consommation de courant élevée (Iₘₐₓ) comme second moment de commutation (t_{U2}).

6. Système hydraulique selon l'une des revendications précédentes, **caractérisé en ce que** le cylindre hydraulique de référence (22) est un cylindre hydraulique de sélecteur de vitesse, et qu'une soupape de sélecteur de vitesse (38) commandable par l'unité de commande (39) est agencée dans un trajet de sélecteur de vitesse de référence (32) menant de l'accumulateur de pression (25) au cylindre hydraulique de référence (22), avec laquelle le courant volumétrique est réglable par le cylindre hydraulique de référence (22).

7. Système hydraulique selon l'une des revendications précédentes, **caractérisé en ce que** le diagnostic d'écartement de soupape est effectué comme un diagnostic de suite temporellement après un diagnostic de moment de commutation, pour lequel il est déterminé si au premier moment de commutation (t_{U1}) la pression d'accumulateur réelle (pₛ(t)) se trouve dans la zone de la valeur seuil de pression supérieure (pₘₐₓ), dans lequel un cas de dysfonctionnement peut être enregistré dans une mémoire d'erreurs de moment de commutation (109).

8. Système hydraulique selon la revendication 7, **caractérisé en ce qu'**une soupape d'embrayage (35) commandable par l'unité de commande (39) est agencée dans au moins un trajet d'embrayage (30, 31) menant de l'accumulateur de pression (25) au cylindre hydraulique d'embrayage (23), avec laquelle une pression hydraulique présente sur le cylindre hydraulique d'embrayage (23) est réglable, et qu'à l'unité de commande (39) électronique est associé un capteur de pression (34), avec lequel la pression hydraulique présente sur le cylindre hydraulique d'embrayage (23) peut être détectée.

9. Système hydraulique selon la revendication 8, **caractérisé en ce que** le capteur de pression de trajet d'embrayage (34) est utilisé pour la détection de la pression d'accumulateur réelle (p_{S}(t)) pendant le diagnostic de moment de commutation.

10. Système hydraulique selon la revendication 9, **caractérisé en ce qu'**une plage de mesure (Δpₘₑₛᵤᵣₑ) du capteur de pression (34) se trouve en dehors, c'est-à-dire en dessous de la valeur seuil de pression supérieure (pₘₐₓ), et qu'une unité d'évaluation (107) estime sur la base de valeurs de pression mesurées (pₐ(tₐ), p_{b}(t_{b})) qui se trouvent dans la plage de mesure de capteur de pression (Δpₘₑₛᵤᵣₑ), une fenêtre de temps (Δt_{deconsigne}), dans laquelle en cas de parfait fonctionnement de soupape le premier moment de commutation (t_{U1}) se trouve, et que pour un premier moment de commutation (t_{U1}) en dehors de la fenêtre de temps (Δt_{de consigne}) un cas de dysfonctionnement est reconnu, lequel peut être enregistré dans une mémoire d'erreurs (109).

11. Système hydraulique selon l'une des revendications 2 à 10, **caractérisé en ce que** pour les composants sollicités pendant l'intervalle de temps de diagnostic (Δt_{D}) par la pression d'accumulateur (p_{S}(t)), en particulier le cylindre hydraulique d'embrayage (23) et/ou le cylindre hydraulique de sélecteur de vitesse (22), une diminution de pression (Δp_{L}) due aux fuites est effectuée.

12. Système hydraulique selon la revendication 11, **caractérisé en ce que** la diminution de pression (Δp_{L}) due aux fuites est effectuée au moyen de diagnostics ou mesures de fuite précédentes.

13. Système hydraulique selon l'une des revendications précédentes, **caractérisé en ce que** le diagnostic de moment de commutation est effectué comme un diagnostic de suite temporellement après un diagnostic de volume d'accumulateur et un diagnostic de trajet de sélecteur de vitesse.

14. Système hydraulique selon la revendication 13, **caractérisé en ce qu'**un diagnostic de volume d'accumulateur peut être réalisé au moyen du module de diagnostic (79), pour lequel une unité d'évaluation (89) du module de diagnostic (79) compare un volume d'accumulateur réel (V_{E}) de l'accumulateur de pression (25) avec un volume d'accumulateur de référence (V_{ref}) de l'accumulateur de pression (25) et en présence d'un écart significatif reconnaît un cas de dysfonctionnement qui peut être enregistré dans une mémoire d'erreurs de volume d'accumulateur (91).
